# EUROPEAN PATENT APPLICATION

(11) **EP 4 797 837 A1**
(43) Date of publication of application: **26.08.2026**
(21) Application number: 24890213.2
(22) Date of filing: 09.08.2024
(51) Int. Cl.: H04W 72/0453

(54) **COMMUNICATION METHOD AND COMMUNICATION APPARATUS**

(30) Priority: 17.11.2023 CN 202311546977
(71) Applicant: HUAWEI TECHNOLOGIES CO., LTD., Shenzhen 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN); SONG, Xinghua, Shenzhen, Guangdong 518129 (CN)
(74) Representative: Pfenning, Meinig & Partner mbB
(86) International application number: PCT/CN2024/110990
(87) International publication number: WO 2025/102849

(57) **Abstract**

This application relates to a communication method and a communication apparatus. The method includes: determining, based on a first frequency domain resource, a second frequency domain resource, where the first frequency domain resource is a frequency domain resource in an overlap between a first uplink BWP and a first uplink subband, the second frequency domain resource includes a third frequency domain resource and a fourth frequency domain resource, and the third frequency domain resource and the fourth frequency domain resource are used to send a first signal; and sending, on the third frequency domain resource and the fourth frequency domain resource in a first SBFD time unit, the first signal through frequency hopping, where the first signal is carried on a PUSCH or a PUCCH.

## Description

This application claims priority to Chinese Patent Application No. 202311546977.9, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

With rapid development of mobile communication technologies, to support emerging services, a subband non-overlapping full-duplex (subband non-overlapping full-duplex, SBFD) solution is proposed to enhance uplink coverage in time division duplex (time division duplex, TDD) systems. SBFD means that, in a TDD system, a network device may implement both reception and transmission in one slot or one orthogonal frequency division multiplexing (orthogonal frequency division multiplexing, OFDM) symbol by using different subbands.

Random access enables a terminal device, when connecting to a network.to achieve uplink time synchronization with a network device. During initial access, the terminal device establishes a radio resource control (radio resource control, RRC) connection with the network device through the random access process, enabling uplink and downlink data transmission. Currently, random access (random access, RA) is supported in SBFD symbols/slots. However, during random access in an SBFD symbol/slot, uplink channel transmission may fall within downlink frequency domain resources of the SBFD symbol/slot, degrading uplink transmission performance.

### SUMMARY

To resolve the foregoing technical problem, this application provides a communication method and a communication apparatus to ensure uplink channel transmission falls within an uplink frequency domain resource in an SBFD time unit, thereby ensuring uplink transmission performance.

According to a first aspect, a communication method is provided. The method may be performed by a sending device, or may be performed by a chip, a circuit, or the like used in the sending device. This is not limited in this application. For ease of description, the following uses an example in which the method is performed by the sending device for description. The sending device may be a terminal device, a chip or a circuit in the terminal device, a functional module that is in the terminal device and that can invoke and execute a program, or the like.

The method includes: determining, based on a first frequency domain resource, a second frequency domain resource, where the first frequency domain resource is a frequency domain resource in an overlap between a first uplink bandwidth part (Bandwidth part, BWP) and a first uplink subband, the second frequency domain resource includes a third frequency domain resource and a fourth frequency domain resource, and the third frequency domain resource and the fourth frequency domain resource are used to send a first signal; and sending, on the third frequency domain resource and the fourth frequency domain resource in a first SBFD time unit, the first signal through frequency hopping, where the first signal is carried on a physical uplink shared channel (physical uplink shared channel, PUSCH) or a physical uplink control channel (physical uplink control channel, PUCCH).

According to the solution provided in this application, the second frequency domain resource is determined based on the frequency domain resource in the overlap between the first uplink BWP and the first uplink subband, and transmission of an uplink signal is performed, through frequency hopping, on the third frequency domain resource and the fourth frequency domain resource that are included in the second frequency domain resource, so that frequency hopping flexibility can be improved, uplink channel transmission falls within an uplink frequency domain resource in an SBFD time unit, normal uplink channel transmission is ensured, and a success rate of random access performed by the terminal device in the SBFD time unit is improved.

It should be understood that the second frequency domain resource includes a frequency domain resource in an SBFD time unit, namely, the third frequency domain resource and the fourth frequency domain resource. In other words, the first signal may be sent on a time-frequency resource including the SBFD time unit and the second frequency domain resource.

It should be further understood that, frequency hopping means that a frequency domain position of a frequency domain resource to which the first signal is to be mapped varies. Generally, when frequency hopping is enabled, a frequency domain position to which data to be sent is mapped changes over time. Frequency positions of data to be sent in different slots may be different. In uplink channel transmission performed through frequency hopping, a frequency diversity gain of a communication system can be obtained, thereby improving uplink transmission performance.

Optionally, the first frequency domain resource may be configured or preconfigured. For example, the terminal device receives indication information from a network device, where the indication information indicates the first uplink BWP and the first uplink subband. Optionally, sizes and positions of the first uplink BWP and the first uplink subband are not specifically limited in this application.

Based on this implementation, the terminal device may determine, based on the received indication information, the first uplink BWP and the first uplink subband, and then determine the first frequency domain resource based on the first uplink BWP and the first uplink subband, and thus determine the second frequency domain resource used for uplink channel transmission. In this way, it is ensured that the uplink channel transmission falls within the uplink frequency domain resource in the SBFD time unit, thereby ensuring transmission performance of an uplink channel.

With reference to the first aspect, in some implementations of the first aspect, the first SBFD time unit includes at least one of the following: one or more slots; or one or more symbols.

According to the foregoing solution, two manners, inter-slot frequency hopping and intra-slot frequency hopping, are provided to perform uplink channel transmission, so that frequency hopping flexibility is improved, the uplink channel transmission falls within the uplink frequency domain resource in the SBFD time unit, and normal uplink channel transmission is ensured.

With reference to the first aspect, in some implementations of the first aspect, the first SBFD time unit includes a first slot and a second slot; and sending, on the third frequency domain resource and the fourth frequency domain resource in the first SBFD time unit, the first signal through frequency hopping includes: sending, on the third frequency domain resource in the first slot, the first signal, and sending, on the fourth frequency domain resource in the second slot, the first signal.

With reference to the first aspect, in some implementations of the first aspect, the first SBFD time unit includes a first symbol and a second symbol; and sending, on the third frequency domain resource and the fourth frequency domain resource in the first SBFD time unit, the first signal through frequency hopping includes: sending, on the third frequency domain resource in the first symbol, the first signal, and sending, on the fourth frequency domain resource in the second symbol, the first signal.

Optionally, whether the first slot and the second slot are consecutive slots and whether the first symbol and the second symbol are consecutive symbols are not limited in this application.

According to the foregoing solution, frequency hopping transmission of the first signal performed in the first slot and the second slot, namely, the inter-slot frequency hopping, is provided, and frequency hopping transmission of the first signal performed in the first symbol and the second symbol, namely, the intra-slot frequency hopping, is provided, so that frequency hopping flexibility is improved, uplink channel transmission falls within the uplink frequency domain resource in the SBFD time unit, and normal uplink channel transmission is ensured.

With reference to the first aspect, in some implementations of the first aspect, the second frequency domain resource further includes a fifth frequency domain resource and a sixth frequency domain resource, the fifth frequency domain resource and the sixth frequency domain resource are used to send the first signal, and the method further includes: sending, on the fifth frequency domain resource and the sixth frequency domain resource in a first non-SBFD time unit, the first signal through frequency hopping.

It should be understood that the second frequency domain resource further includes a frequency domain resource in a non-SBFD time unit, namely, the fifth frequency domain resource and the sixth frequency domain resource. In other words, the first signal may be sent on a time-frequency resource including the non-SBFD time unit and the second frequency domain resource.

According to the foregoing solution, uplink channel transmission performed on the fifth frequency domain resource and the sixth frequency domain resource in the non-SBFD time unit through frequency hopping is provided, so that frequency hopping flexibility can be improved, normal uplink channel transmission is ensured, and a success rate of random access of the terminal device is improved.

With reference to the first aspect, in some implementations of the first aspect, the first non-SBFD time unit includes at least one of the following: one or more slots; or one or more symbols.

According to the foregoing solution, two manners, inter-slot frequency hopping and intra-slot frequency hopping, are provided to perform uplink channel transmission, so that frequency hopping flexibility is improved, and normal uplink channel transmission is ensured.

With reference to the first aspect, in some implementations of the first aspect, the first non-SBFD time unit includes a third slot and a fourth slot; and sending, on the fifth frequency domain resource and the sixth frequency domain resource in the first non-SBFD time unit, the first signal through frequency hopping includes: sending, on the fifth frequency domain resource in the third slot, the first signal, and sending, on the sixth frequency domain resource in the fourth slot, the first signal.

With reference to the first aspect, in some implementations of the first aspect, the first non-SBFD time unit includes a third symbol and a fourth symbol; and sending, on the fifth frequency domain resource and the sixth frequency domain resource in the first non-SBFD time unit, the first signal through frequency hopping includes: sending, on the fifth frequency domain resource in the third symbol, the first signal, and sending, on the sixth frequency domain resource in the fourth symbol, the first signal.

Optionally, whether the third slot and the fourth slot are consecutive slots and whether the third symbol and the fourth symbol are consecutive symbols are not limited in this application.

According to the foregoing solution, frequency hopping transmission of the first signal performed in the third slot and the fourth slot, namely, the inter-slot frequency hopping, is provided, and frequency hopping transmission of the first signal performed in the third symbol and the fourth symbol, namely, the intra-slot frequency hopping, is provided, so that frequency hopping flexibility is improved, and normal uplink channel transmission is ensured.

With reference to the first aspect, in some implementations of the first aspect, the method further includes:
when ${N}_{BWP}^{size} ′ < = 180$, truncating a frequency domain resource allocation (frequency domain resource allocation, FDRA) field to *m* least significant bits, where *m* = $\left⌈{log}_{2}\left({N}_{BWP}^{size}′⋅\left({N}_{BWP}^{size}′+1\right)/2\right)\right⌉$, and determining, based on the *m* least significant bits, the third frequency domain resource and the fourth frequency domain resource, where *m* is a positive integer. ${N}_{BWP}^{size} ′$ represents a quantity of RBs included in the first frequency domain resource, ┌┐ represents rounding up, and log represents taking a logarithm.

With reference to the first aspect, in some implementations of the first aspect, the method further includes:
when ${N}_{BWP}^{size} ′ > 180$, inserting n most significant bits into the FDRA field, where $n = \left⌈{log}_{2}\left({N}_{BWP}^{size}′⋅\left({N}_{BWP}^{size}′+1\right)/2\right)\right⌉ - 12$, and determining, based on an FDRA field into which the *n* most significant bits are inserted, the third frequency domain resource and the fourth frequency domain resource, where *n* is a positive integer; or inserting *p* most significant bits into the FDRA field, where $p = \left⌈{log}_{2}\left({N}_{BWP}^{size}′⋅\left({N}_{BWP}^{size}′+1\right)/2\right)\right⌉ - 14$, and determining, based on an FDRA field into which the *p* most significant bits are inserted, the third frequency domain resource and the fourth frequency domain resource, where *p* is a positive integer. ${N}_{BWP}^{size} ′$ represents the quantity of RBs included in the first frequency domain resource, ┌┐ represents rounding up, and log represents taking a logarithm.

According to the foregoing solution, frequency domain positions of the third frequency domain resource and the fourth frequency domain resource in the SBFD time unit are determined by using an FDRA field after truncation (including *m* least significant bits) or an FDRA field into which n/p most significant bits are inserted, to transmit an uplink signal on the third frequency domain resource and the fourth frequency domain resource through frequency hopping, so that frequency hopping flexibility can be improved, uplink channel transmission falls within the uplink frequency domain resource in the SBFD time unit, normal uplink channel transmission is ensured, and a success rate of random access performed by the terminal device in the SBFD time unit is improved.

With reference to the first aspect, in some implementations of the first aspect, when $\left({L}_{RBs}-1\right) \leq \left⌊{N}_{BWP}^{size}′/2\right⌋$*,* a resource indication value (Resource Indication Value, RIV) in a current FDRA field satisfies: $RIV = {{N}_{BWP}^{size}}^{′ \left({L}_{RBs}\right.} \left.-1\right) + \left({RB}_{start}-{RB}_{offset}\right)$; or when $\left({L}_{RBs}-1\right) > \left⌊{N}_{BWP}^{size}′/2\right⌋$ , the RIV in the current FDRA field satisfies: $RIV = {N}_{BWP}^{size} ′ \left({N}_{BWP}^{size}′-{L}_{RBs}+1\right) + \left({N}_{BWP}^{size}′-1-\left({RB}_{start}-{RB}_{offset}\right)\right)$ . *L_{RBs}* represents a quantity of RBs included in the third frequency domain resource or the fourth frequency domain resource, RBₛₜₐᵣₜ represents a start RB of the third frequency domain resource or a start RB of the fourth frequency domain resource, *RB_{offset}* represents a frequency offset between a start RB of the first frequency domain resource and a start RB of the first uplink BWP, ${N}_{BWP}^{size} ′$ represents the quantity of RBs included in the first frequency domain resource, and └┘ represents rounding down.

It should be understood that the current FDRA field may be understood as a latest FDRA field. For example, the current FDRA field is an FDRA field that is truncated to *m* least significant bits, may be an FDRA field into which n most significant bits are inserted, or may be an FDRA field into which *p* most significant bits are inserted. An FDRA field before truncation to m least significant bits, an FDRA field before insertion of *n* most significant bits, or an FDRA field before insertion of *p* most significant bits may be understood as an FDRA field defined in an existing standard.

With reference to the first aspect, in some implementations of the first aspect, determining, based on the first frequency domain resource, the second frequency domain resource includes: determining, based on the fifth frequency domain resource, the sixth frequency domain resource, and a first frequency offset, frequency domain positions of the third frequency domain resource and the fourth frequency domain resource, where the first frequency offset represents a frequency offset between a start RB of the first frequency domain resource and a start RB of the first uplink BWP.

For example, the fifth frequency domain resource and the sixth frequency domain resource may be determined based on an existing FDRA field, that is, a frequency offset value between the fifth frequency domain resource and the sixth frequency domain resource is determined based on a frequency hopping indication bit in an FDRA field.

In an implementation, determining, based on the fifth frequency domain resource, the sixth frequency domain resource, and the first frequency offset, the frequency domain positions of the third frequency domain resource and the fourth frequency domain resource may be understood as: The frequency domain positions of the third frequency domain resource and the fourth frequency domain resource are obtained by adding the first frequency offset to frequency domain positions of the fifth frequency domain resource and the sixth frequency domain resource the third frequency domain resource and the fourth frequency domain resource, respectively, that is, the third frequency domain resource and the fourth frequency domain resource may be obtained by respectively offsetting, in frequency domain, the fifth frequency domain resource and the sixth frequency domain resource by the first frequency offset.

With reference to the first aspect, in some implementations of the first aspect, $\begin{matrix}{RB}_{start} \left({n}_{s}^{μ}\right) \\ = \left\{\begin{matrix}{RB}_{start} \\ {RB}_{start} mod {N}_{BWP}^{size} ′ + {RB}_{offset} \\ \left({RB}_{start}+{RB}_{offset 1}\right) {modN}_{BWP}^{size} \\ \left({RB}_{start} mod {N}_{BWP}^{size}′+{RB}_{offset}+{RB}_{offset 2}\right) {modN}_{BWP}^{size} ′ + {RB}_{offset}\end{matrix} \begin{matrix}{n}_{s}^{μ} mod 2 = 0 , {n}_{s}^{μ} is the first non - SBFD time unit \\ {n}_{s}^{μ} mod 2 = 0 , {n}_{s}^{μ} is the first SBFD time unit \\ {n}_{s}^{μ} mod 2 = 1 , {n}_{s}^{μ} is the first non - SBFD time unit \\ {n}_{s}^{μ} mod = 1 , {n}_{s}^{μ} is the first SBFD time unit\end{matrix}\right.\end{matrix}$${n}_{s}^{μ}$ represents the first SBFD time unit or the first non-SBFD time unit, *RBₛₜₐᵣₜ* represents a start RB of the fifth frequency domain resource or a start RB of the sixth frequency domain resource, *RB_{offset}* represents the first frequency offset, ${N}_{BWP}^{size} ′$ represents a quantity of RBs included in the first frequency domain resource, ${N}_{BWP}^{size}$ represents a quantity of RBs included in the first uplink BWP, *RB*_{*offset*1} represents a frequency offset between the start RB of the fifth frequency domain resource and the start RB of the sixth frequency domain resource, *RB*_{*offsec*2} represents a frequency offset between a start RB of the third frequency domain resource and a start RB of the fourth frequency domain resource, and mod represents a modulo operation.

According to the foregoing solution, frequency domain resources in a non-SBFD time unit and an SBFD time unit may be determined according to the foregoing formula. For example, the fifth frequency domain resource and the sixth frequency domain resource may be determined according to the first formula and the third formula, and the third frequency domain resource and the fourth frequency domain resource may be determined according to the second formula and the fourth formula. It can be learned that the third frequency domain resource and the fourth frequency domain resource in the SBFD time unit may be considered as being obtained by adding the first frequency offset to the fifth frequency domain resource and the sixth frequency domain resource, and the first frequency offset is defined, so that uplink channel transmission falls within an uplink frequency domain resource in the SBFD time unit, normal uplink channel transmission is ensured, and a success rate of random access performed by the terminal device in the SBFD time unit is improved.

With reference to the first aspect, in some implementations of the first aspect, determining, based on the first frequency domain resource, the second frequency domain resource includes: determining, based on the fifth frequency domain resource, the sixth frequency domain resource, and a first coefficient, frequency domain positions of the third frequency domain resource and the fourth frequency domain resource, where the first coefficient *α* satisfies: $α = {N}_{BWP}^{size} ′ / {N}_{BWP}^{size}$ . ${N}_{BWP}^{size} ′$ represents a quantity of RBs included in the first frequency domain resource, and ${N}_{BWP}^{size}$ represents a quantity of RBs included in the first uplink BWP.

The first coefficient may also be referred to as a scaling factor, that is, *α* is positive number, and *α* may be greater than or equal to 1, or may be less than or equal to 1. This is not limited in this application.

For example, the fifth frequency domain resource and the sixth frequency domain resource may be determined based on an existing FDRA field, that is, a frequency offset value between the fifth frequency domain resource and the sixth frequency domain resource is determined based on a frequency hopping indication bit in an FDRA field.

With reference to the first aspect, in some implementations of the first aspect, $\begin{matrix}{RB}_{start} \left({n}_{s}^{μ}\right) \\ = \left\{\begin{matrix}{RB}_{start} \\ \left⌊{RB}_{start}∗α\right⌋ + {RB}_{offset} \\ \left({RB}_{start}+{RB}_{offset 1}\right) {modN}_{BWP}^{size} \\ \left⌊\left({RB}_{start}+{RB}_{offset 1}\right){modN}_{BWP}^{size}∗α\right⌋ + {RB}_{offset}\end{matrix} \begin{matrix}{n}_{s}^{μ} mod 2 = 0 , {n}_{s}^{μ} is the first non - SBFD time unit \\ {n}_{s}^{μ} mod 2 = 0 , {n}_{s}^{μ} is the first SBFD time unit \\ {n}_{s}^{μ} mod 2 = 1 , {n}_{s}^{μ} is the first non - SBFD time unit \\ {n}_{s}^{μ} mod 2 = 1 , {n}_{s}^{μ} is the first SBFD time unit\end{matrix}\right.\end{matrix}$${n}_{s}^{μ}$ represents the first SBFD time unit or the first non-SBFD time unit, RBₛₜₐᵣₜ represents a start RB of the fifth frequency domain resource or a start RB of the sixth frequency domain resource, *RB_{offset}* represents a frequency offset between a start RB of the first frequency domain resource and a start RB of the first uplink BWP, *RB*_{*offset*1} represents a frequency offset between the start RB of the fifth frequency domain resource and the start RB of the sixth frequency domain resource, mod represents a modulo operation, and └┘ represents rounding down.

According to the foregoing solution, frequency domain resources in a non-SBFD time unit and an SBFD time unit may be determined according to the foregoing formula. For example, the fifth frequency domain resource and the sixth frequency domain resource may be determined according to the first formula and the third formula, and the third frequency domain resource and the fourth frequency domain resource may be determined according to the second formula and the fourth formula. It can be learned that the third frequency domain resource and the fourth frequency domain resource in the SBFD time unit may be considered as being obtained by processing the fifth frequency domain resource and the sixth frequency domain resource based on the first coefficient, and the first coefficient is defined, so that uplink channel transmission falls within an uplink frequency domain resource in the SBFD time unit, normal uplink channel transmission is ensured, and a success rate of random access performed by the terminal device in the SBFD time unit is improved.

With reference to the first aspect, in some implementations of the first aspect, determining, based on the first frequency domain resource, the second frequency domain resource includes: determining, based on a first frequency offset and a second frequency offset, a frequency domain position of the third frequency domain resource and a frequency domain position of the fourth frequency domain resource, where the first frequency offset is a frequency offset between a start RB of the first frequency domain resource and a start RB of the first uplink BWP, and the second frequency offset is a frequency offset between an end RB of the first uplink BWP and an end RB of the first frequency domain resource.

According to the foregoing solution, the frequency domain position of the third frequency domain resource and the frequency domain position of the fourth frequency domain resource are determined by defining the first frequency offset and the second frequency offset, so that uplink channel transmission falls within an uplink frequency domain resource in the SBFD time unit, normal uplink channel transmission is ensured, and a success rate of random access performed by the terminal device in the SBFD time unit is improved.

With reference to the first aspect, in some implementations of the first aspect, when $\left⌊{r}_{PUCCH}/8\right⌋ = 0$, a frequency domain position of a lowest physical resource block (Physical Resource Block, PRB) of the third frequency domain resource satisfies: PRB index (index) ${RB}_{BWP}^{offset} ⋅ {N}_{RB} + \left⌊{r}_{PUCCH}/{N}_{CS}\right⌋ ⋅ {N}_{RB} + {RB}_{offset}$*,* and a frequency domain position of a lowest PRB of the fourth frequency domain resource satisfies: PRB $index = {N}_{BWP}^{size} - {RB}_{BWP}^{offset} ⋅ {N}_{RB} - \left(1+\left⌊{r}_{PUCCH}/{N}_{CS}\right⌋\right) ⋅ {N}_{RB} - {RB}_{offset 3} ⋅ {r}_{PUCCH}$ represents a resource index of the PUCCH, ${RB}_{BWP}^{offset}$ represents a frequency offset of an RB in the first uplink BWP, ${N}_{BWP}^{size}$ represents a quantity of RBs included in the first uplink BWP, *N_{CS}* is a quantity of initial cyclic shift indexes in an initial cyclic shift index set, *RB_{offset}* represents the first frequency offset, *RB*_{*offset*3} represents the second frequency offset, └┘ represents rounding down, and *N_{RB}* represents a quantity of RBs.

It should be understood that the resource index of the PUCCH indicates a PUCCH resource. Currently, it is defined in a protocol that common PUCCH resources are configured in a form of set. A common PUCCH resource set includes a total of 16 PUCCH resources, and one UE uses one PUCCH resource in one PUCCH transmission. Therefore, the resource index of the PUCCH indicates one of the 16 PUCCH resources.

It may be understood that, when $\left⌊{r}_{PUCCH}/8\right⌋ = 0$, the formulas ${RB}_{BWP}^{offset} ⋅ {N}_{RB} + \left⌊{r}_{PUCCH}/{N}_{CS}\right⌋ ⋅ {N}_{RB} + {RB}_{offset}$ and PRB $PRB index = {N}_{BWP}^{size} - {RB}_{BWP}^{offset} ⋅ {N}_{RB} - \left(1+\left⌊{r}_{PUCCH}/{N}_{CS}\right⌋\right) ⋅$. ${N}_{RB} - {RB}_{offset 3}$ are used to determine frequency domain positions of first eight PUCCH resources of the 16 PUCCH resources.

It should be noted that frequency domain positions of PRBs of the third frequency domain resource and the fourth frequency domain resource are interchangeable. In other words, frequency domain positions of the first eight PUCCH resources in the SBFD time unit may be determined according to the foregoing two formulas.

With reference to the first aspect, in some implementations of the first aspect, when $\left⌊{r}_{PUCCH}/8\right⌋ = 1$, the frequency domain position of the lowest PRB of the third frequency domain resource satisfies: PRB $index = {N}_{BWP}^{size} - {RB}_{BWP}^{offset} ⋅ {N}_{RB} - \left(1+\left⌊\left({r}_{PUCCH}-8\right)/{N}_{CS}\right⌋\right) ⋅ {N}_{RB} - {RB}_{offset 3}$ , and the frequency domain position of the lowest PRB of the fourth frequency domain resource satisfies: PRB $index = {RB}_{BWP}^{offset} ⋅ {N}_{RB} + \left⌊\left({r}_{PUCCH}-8\right)/{N}_{CS}\right⌋ ⋅ {N}_{RB} + {RB}_{offset}$. *r*_{PUCCH} represents the resource index of the PUCCH, ${RB}_{BWP}^{offset}$ represents the frequency offset of the RB in the first uplink BWP, ${N}_{BWP}^{size}$ represents the quantity of RBs included in the first uplink BWP, *N_{CS}* is the quantity of initial cyclic shift indexes in the initial cyclic shift index set, *RB_{offset}* represents the first frequency offset, *RB*_{*offset*3} represents the second frequency offset, └ ┘ represents rounding down, and *N_{RB}* represents the quantity of RBs.

It may be understood that, when $\left⌊{r}_{PUCCH}/8\right⌋ = 1$, the formulas PRB $index = {N}_{BWP}^{size} - {RB}_{BWP}^{offset} ⋅ {N}_{RB} - \left(1+\left⌊\left({r}_{PUCCH}-8\right)/{N}_{CS}\right⌋\right) ⋅ {N}_{RB} - {RB}_{offset 3}$ and PRB $index = {RB}_{BWP}^{offset} ⋅ {N}_{RB} + \left⌊\left({r}_{PUCCH}-8\right)/{N}_{CS}\right⌋ ⋅ {N}_{RB} + {RB}_{offset}$ are used to determine frequency domain positions of last eight PUCCH resources in the 16 PUCCH resources.

It should be noted that the frequency domain positions of the PRBs of the third frequency domain resource and the fourth frequency domain resource are interchangeable. In other words, frequency domain positions of the last eight PUCCH resources in the SBFD time unit may be determined according to the foregoing two formulas.

According to a second aspect, a communication method is provided. The method may be performed by a receiving device, or may be performed by a chip or a circuit used in the receiving device. This is not limited in this application. For ease of description, the following uses an example in which the method is performed by the receiving device for description. The receiving device may be a network device, a chip or a circuit in the network device, a central unit (central unit, CU) or a distributed unit (distributed unit, DU) in the network device, or a functional module that is in the network device and that can invoke and execute a program.

The method includes: sending indication information, where the indication information indicates a first uplink BWP and a first uplink subband, the first uplink BWP and the first uplink subband are used to determine a first frequency domain resource, and the first frequency domain resource is a frequency domain resource in an overlap between the first uplink BWP and the first uplink subband; and receiving, on a third frequency domain resource and a fourth frequency domain resource in a first SBFD time unit, a first signal, where the first signal is carried on a PUSCH or a PUCCH, the third frequency domain resource and the fourth frequency domain resource are included in a second frequency domain resource, and the second frequency domain resource is determined based on the first frequency domain resource.

According to the solution provided in this application, the second frequency domain resource is determined based on the frequency domain resource in the overlap between the first uplink BWP and the first uplink subband, and transmission of an uplink signal is performed, through frequency hopping, on the third frequency domain resource and the fourth frequency domain resource that are included in the second frequency domain resource, so that frequency hopping flexibility can be improved, uplink channel transmission falls within an uplink frequency domain resource in an SBFD time unit, normal uplink channel transmission is ensured, and a success rate of random access performed by the terminal device in the SBFD time unit is improved.

With reference to the second aspect, in some implementations of the second aspect, the first SBFD time unit includes a first slot and a second slot; and receiving, on the third frequency domain resource and the fourth frequency domain resource in the first SBFD time unit, the first signal includes: receiving, on the third frequency domain resource in the first slot, the first signal, and receiving, on the fourth frequency domain resource in the second slot, the first signal.

With reference to the second aspect, in some implementations of the second aspect, the first SBFD time unit includes a first symbol and a second symbol; and receiving, on the third frequency domain resource and the fourth frequency domain resource in the first SBFD time unit, the first signal includes: receiving, on the third frequency domain resource in the first symbol, the first signal, and receiving, on the fourth frequency domain resource in the second symbol, the first signal.

With reference to the second aspect, in some implementations of the second aspect, the second frequency domain resource further includes a fifth frequency domain resource and a sixth frequency domain resource, the fifth frequency domain resource and the sixth frequency domain resource are used to receive the first signal, and the method further includes: receiving, on the fifth frequency domain resource and the sixth frequency domain resource in a first non-SBFD time unit, the first signal.

With reference to the second aspect, in some implementations of the second aspect, the first non-SBFD time unit includes a third slot and a fourth slot; and receiving, on the fifth frequency domain resource and the sixth frequency domain resource in the first non-SBFD time unit, the first signal includes: receiving, on the fifth frequency domain resource in the third slot, the first signal, and receiving, on the sixth frequency domain resource in the fourth slot, the first signal.

With reference to the second aspect, in some implementations of the second aspect, the first non-SBFD time unit includes a third symbol and a fourth symbol; and receiving, on the fifth frequency domain resource and the sixth frequency domain resource in the first non-SBFD time unit, the first signal includes: receiving, on the fifth frequency domain resource in the third symbol, the first signal, and receiving, on the sixth frequency domain resource in the fourth symbol, the first signal.

For beneficial effects of the second aspect and some implementations of the second aspect, correspondingly refer to descriptions of the first aspect and related implementations of the first aspect. Details are not described herein again.

According to a third aspect, a communication apparatus is provided. The communication apparatus includes: a processing unit, configured to determine, based on a first frequency domain resource, a second frequency domain resource, where the first frequency domain resource is a frequency domain resource in an overlap between a first uplink BWP and a first uplink subband, the second frequency domain resource includes a third frequency domain resource and a fourth frequency domain resource, and the third frequency domain resource and the fourth frequency domain resource are used to send a first signal; and a transceiver unit, configured to send, on the third frequency domain resource and the fourth frequency domain resource in a first SBFD time unit, the first signal through frequency hopping, where the first signal is carried on a PUSCH or a PUCCH.

The transceiver unit may perform receiving and sending in the first aspect, and the processing unit may perform processing other than receiving and sending in the first aspect.

According to a fourth aspect, a communication apparatus is provided. The communication apparatus includes a transceiver unit, configured to send indication information, where the indication information indicates a first uplink BWP and a first uplink subband, the first uplink BWP and the first uplink subband are used to determine a first frequency domain resource, and the first frequency domain resource is a frequency domain resource in an overlap between the first uplink BWP and the first uplink subband. The transceiver unit is further configured to receive, on a third frequency domain resource and a fourth frequency domain resource in a first SBFD time unit, a first signal, where the first signal is carried on a PUSCH or a PUCCH, the third frequency domain resource and the fourth frequency domain resource are included in a second frequency domain resource, and the second frequency domain resource is determined based on the first frequency domain resource.

The transceiver unit may perform receiving and sending in the second aspect, and the processing unit may perform processing other than receiving and sending in the second aspect.

According to a fifth aspect, a communication apparatus is provided. The communication apparatus includes a transceiver, a processor, and a memory. The processor is configured to control the transceiver to receive and send a signal. The memory is configured to store a computer program. The processor is configured to invoke the computer program from the memory and run the computer program, to cause the communication apparatus to perform the method in any one of the possible implementations of the first aspect or the second aspect.

Optionally, there are one or more processors, and there are one or more memories.

Optionally, the memory and the processor may be integrated together, or the memory and the processor may be separately disposed.

Optionally, the communication apparatus further includes a transmitter machine (transmitter) and a receiver machine (receiver).

According to a sixth aspect, a communication system is provided. The communication system includes a sending device and a receiving device. The sending device is configured to perform the method in any one of the possible implementations of the first aspect, and the receiving device is configured to perform the method in any one of the possible implementations of the second aspect.

For example, the sending device may be a terminal device, a chip or a circuit in the terminal device, or a functional module that is in the terminal device and that can invoke and execute a program.

For example, the receiving device may be a network device, a chip or a circuit in the network device, a CU or a DU in the network device, or a functional module that is in the network device and that can invoke and execute a program.

According to a seventh aspect, a computer program is provided. When the computer program is run, the method in any one of the possible implementations of the first aspect or the second aspect is performed.

According to an eighth aspect, a computer-readable storage medium is provided. The computer-readable storage medium stores a computer program or code, and when the computer program or the code is run, the method in any one of the possible implementations of the first aspect or the second aspect is performed.

According to a ninth aspect, a chip is provided. The chip includes at least one processor. The at least one processor is coupled to a memory. The memory is configured to store a computer program. The processor is configured to invoke the computer program from the memory and run the computer program, to cause a communication apparatus in which a chip system is installed to perform the method in any one of the possible implementations of the first aspect or the second aspect.

The chip may include an input circuit or interface configured to send information or data and an output circuit or interface configured to receive information or data.

According to a tenth aspect, a computer program product is provided. The computer program product includes computer program code, and when the computer program code runs, the method in any one of the possible implementations of the first aspect or the second aspect is performed.

According to an eleventh aspect, a computer program is provided. When the computer program is run, the method in any one of the possible implementations of the first aspect or the second aspect is performed.

### BRIEF DESCRIPTION OF DRAWINGS

FIG. 1 is a diagram of a communication system according to an embodiment of this application;
FIG. 2 is a diagram of time-frequency division in an SBFD solution;
FIG. 3a to FIG. 3c are diagrams of an SBFD dedicated uplink-downlink slot configuration;
FIG. 4 is a schematic flowchart of a four-step random access process;
FIG. 5 is a schematic flowchart of a two-step random access process;
FIG. 6a and FIG. 6b are diagrams of transmission on a Msg3/Msg3 retransmission PUSCH;
FIG. 7 is a diagram of PUCCH feedback for Msg4/MsgB PDSCH;
FIG. 8 is a schematic flowchart of a communication method according to this application;
FIG. 9 and FIG. 10 are diagrams of transmission on a Msg3 PUSCH or a Msg3 retransmission PUSCH according to this application;
FIG. 11 is a diagram of transmission on a PUCCH for Msg4/MsgB PDSCH according to this application;
FIG. 12 is a schematic block diagram of a communication apparatus according to an embodiment of this application; and
FIG. 13 is a schematic block diagram of a communication apparatus according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR) and a future communication system, and vehicle-to-X (vehicle-to-X V2X), where V2X may include vehicle-to-network (vehicle-to-network, V2N), vehicle to vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), machine to machine (machine to machine, M2M), and the like.

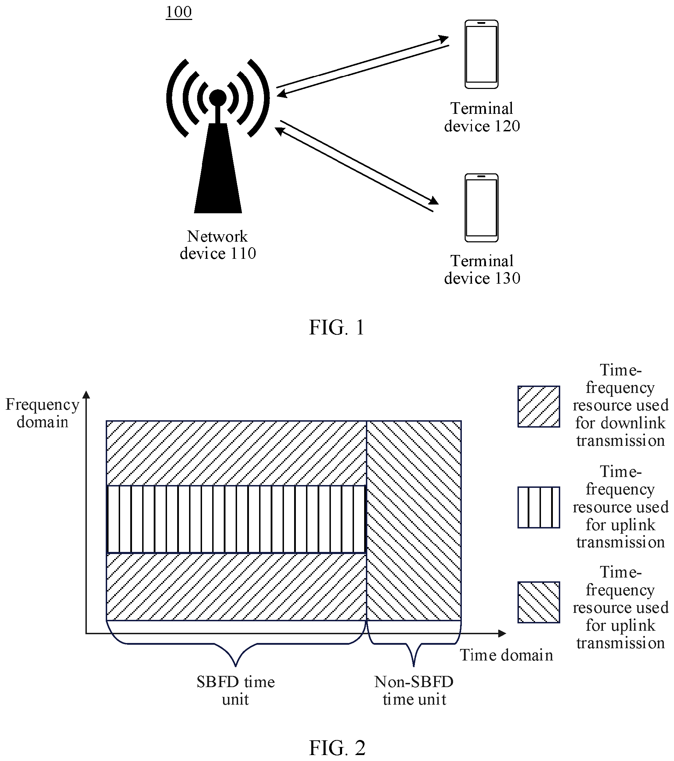

FIG. 1 is a diagram of a communication system according to an embodiment of this application. As shown in FIG. 1, the communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link to exchange information. It may be understood that the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central units, CUs), one or more distributed units (distributed units, DUs), or one or more radio units (radio units, RUs). In different systems, the CU (or the CU-CP and the CU-UP), the DU, or the RU may alternatively have different names, but a person skilled in the art may understand meanings thereof. For example, the radio access network may alternatively be of an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module. For example, a function of the CU may be implemented by one entity or different entities. For example, functions of the CU are further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a roadside unit (roadside unit, RSU). A plurality of access network devices in the communication system may be base stations of a same type, or may be base stations of different types. The base station may communicate with the terminal device, or may communicate with the terminal device through a relay station. In embodiments of this application, the apparatus configured to implement a function of the network device may be the network device, or may be an apparatus that can support the network device in implementing the function, for example, a chip system or a combined component or component that can implement a function of the access network device. The apparatus may be installed in the network device. In embodiments of this application, the chip system may include a chip, or may include a chip and another discrete device.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine type communication, M2M/MTC), internet of things, virtual reality (virtual reality, VR), augmented reality (augmented reality, AR), industrial control (industrial control), self-driving (self-driving), telemedicine (remote medical), smart grids (smart grid), smart furniture, smart office, smart wearables, smart transportation, smart cities (smart city), uncrewed aerial vehicles, and robots. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as a user equipment (user equipment, UE), a user terminal, a user apparatus, a subscriber unit, a subscriber station, a terminal, an access terminal, an access station, a UE station, a remote station, a mobile device, a wireless communication device, or the like. The terminal device may alternatively be a terminal device in an IoT system. IoT is an important part in future development of the information technology. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology. In embodiments of this application, an apparatus configured to implement a function of the terminal device may be the terminal device, or may be an apparatus that supports the terminal device in implementing the function, for example, a chip system or a combined component or part that can implement a function of the terminal device. The apparatus may be installed in the terminal device.

The network device and the terminal device may be deployed on land, including being deployed indoors or outdoors, or in a handheld manner or a vehicle-mounted manner; may be deployed on water; or may be deployed on an airplane, a balloon, and a satellite in the air. Scenarios in which the network device and the terminal device are located are not limited in embodiments of this application.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF is a control plane network function provided by the operator network. In embodiments of this application, when the communication system 100 includes the AF network element and the SMF network element, the AF may send service-related information to the network device through the SMF.

For ease of understanding of embodiments of this application, concepts and related procedures in this application are described first.

### 1. SBFD

In an SBFD solution, one carrier is divided into a plurality of overlapping or non-overlapping subbands, and transmission directions of different subbands may be different. In other words, one carrier includes non-overlapping first and second subbands, and transmission directions of the first subband and the second subband are different. It should be noted that the first subband and the second subband are two types of subbands with different transmission directions, and do not mean that one carrier includes only two subbands. For example, one carrier includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different.

In this application, SBFD includes subband overlapping full-duplex (subband overlapping full-duplex) and subband non-overlapping full-duplex (subband non-overlapping full-duplex).

### 2. Subband

A subband is a part of a frequency band in a carrier, namely, one or more consecutive PRBs in frequency domain. In this application, a subband used for uplink transmission is referred to as an uplink subband, and a subband used for downlink transmission is referred to as a downlink subband. The subband may also be understood as a frequency resource. Currently, a base station supports FD SBFD, that is, in one slot, sending in an uplink subband and receiving in a downlink subband can be simultaneously performed. A terminal device supports only half-duplex (Half duplex, HF) SBFD, that is, in one slot, sending can be performed only in an uplink subband, or receiving can be performed only in a downlink subband.

### 3. SBFD time unit

Frequency resources in an SBFD time unit include an uplink frequency resource and a downlink frequency resource, where the uplink frequency resource is used for uplink transmission, and the downlink frequency resource is used for downlink transmission. It may be understood that the SBFD time unit includes subbands used for uplink transmission and downlink transmission, and a gNB may perform an SBFD operation using the subbands in the SBFD time unit. In embodiments of this application, when a time unit is a symbol, the SBFD time unit is an SBFD symbol. When a time unit is a slot, a subframe, a half-frame, a frame, a mini-subframe, a mini-slot, or a transmission occasion (transmission occasion, TO), the SBFD time unit may be a time unit including an SBFD symbol.

It should be noted that a frequency domain resource in the SBFD time unit in this application may include a downlink subband (DL subband) and an uplink subband (UL subband). To avoid cross-link interference between downlink transmission in the DL subband and uplink transmission in the UL subband, a guard band (guard band) may be further defined between the DL subband and the UL subband. Whether a guard band exists between the DL subband and the UL subband, and if the guard band exists, whether transmission is supported in the guard band are not limited in this application. In addition, whether the DL subband and the UL subband may overlap is not limited in this application.

FIG. 2 is a diagram of time-frequency division in an SBFD solution. A horizontal axis represents time domain, and a vertical axis represents frequency domain. In FIG. 2, two rectangles filled with left slashes each represent a group of time-frequency resources used for downlink transmission, and a rectangle filled with vertical bars represents a group of time-frequency resources used for communication. A time domain resource within a time domain range occupied by the three groups of time-frequency resources is referred to as an SBFD time unit.

### 4. Non-SBFD time unit

A frequency resource corresponding to each of all symbols included in a non-SBFD time unit is used only for downlink transmission or used only for uplink transmission. In embodiments of this application, when a time unit is a symbol, the non-SBFD time unit is a non-SBFD symbol. When a time unit is a slot, a subframe, a half-frame, a frame, a mini-subframe, a mini-slot, or a TO, the non-SBFD time unit may be a time unit not including an SBFD symbol. For example, all the symbols in the non-SBFD time unit are downlink symbols; all the symbols in the non-SBFD time unit are uplink symbols; all the symbols in the non-SBFD time unit are flexible symbols; in a non-full-duplex time unit, some symbols are downlink symbols, and some symbols are uplink symbols; in the non-full-duplex time unit, some symbols are downlink symbols, some symbols are uplink symbols, and some symbols are flexible symbols; in the non-full-duplex time unit, some symbols are downlink symbols, and some symbols are flexible symbols; or in the non-full-duplex time unit, some symbols are uplink symbols, and some symbols are flexible symbols. For example, a rectangle filled with right slashes in FIG. 2 represents a group of time-frequency resources used for uplink transmission, and slots in a time domain range occupied by the time-frequency resources are referred to as uplink time units. Transmission directions of all frequency resources in these time units are uplink, and these time units may be referred to as non-SBFD time units.

### 5. SBFD dedicated uplink-downlink slot configuration

Based on different configurations of an uplink subband and a downlink subband in a slot, for example, an SBFD dedicated uplink-downlink slot configuration may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and at least one uplink subband and at least one downlink subband may both be configured on each symbol in the SBFD time unit.

It should be understood that quantities of X in XXXXX, XXXXU, and DXXXU are merely examples for description, and the quantities of X may be configured by a network device based on an actual situation. In addition, XXXXX, XXXXU, and DXXXU may be configured through cell-level uplink-downlink slot configuration signaling and UE-level uplink-downlink slot configuration signaling.

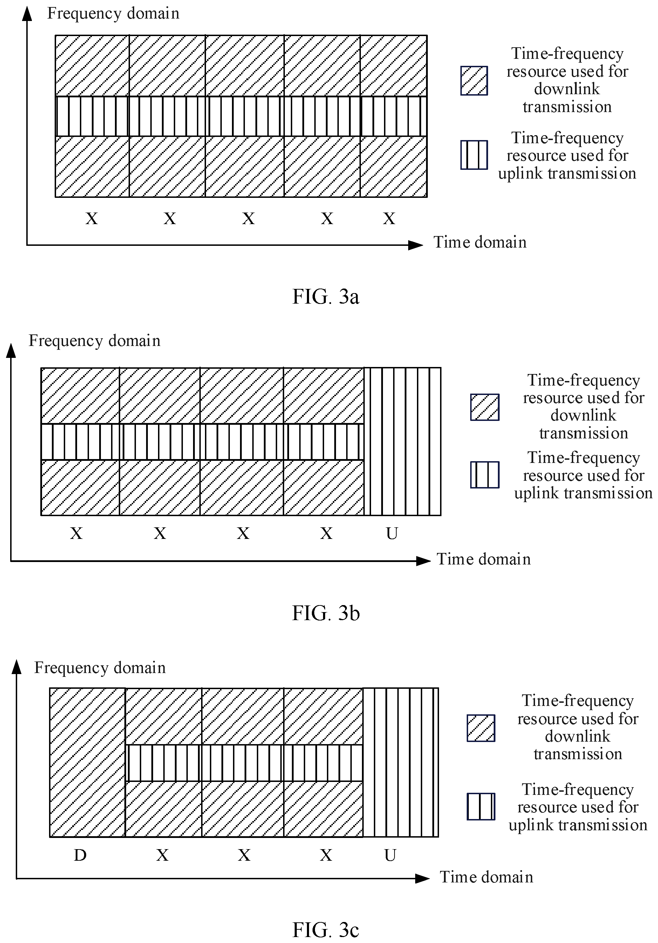

FIG. 3a to FIG. 3c are diagrams of an SBFD dedicated uplink-downlink slot configuration. FIG. 3a is a possible example of XXXXX, FIG. 3b is a possible example of XXXXU, and FIG. 3c is a possible example of DXXXU. In this configuration method, uplink and downlink subbands configured on flexible symbols are invisible to a UE. In other words, the UE does not know frequency resource positions of the uplink and downlink subbands. In this case, if the UE determines to perform downlink transmission in a flexible symbol, a gNB should ensure that the UE is indicated to perform downlink reception only in a downlink subband configured on the flexible symbol. If the UE determines to perform uplink transmission in a flexible symbol, the gNB should ensure that the UE is indicated to perform uplink transmission only in an uplink subband configured on the flexible symbol.

### 6. SBFD dedicated uplink-downlink slot configuration

Based on different configurations of an uplink subband and a downlink subband in a slot, for example, an SBFD dedicated uplink-downlink slot configuration may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and each symbol in the SBFD time unit may be configured with both at least one uplink subband and at least one downlink subband.

It should be understood that quantities of X in XXXXX, XXXXU, and DXXXU are merely examples for description, and the quantities of X may be configured by a network device based on an actual situation. In addition, XXXXX, XXXXU, and DXXXU may be configured through cell-level uplink-downlink slot configuration signaling and UE-level uplink-downlink slot configuration signaling.

As shown in FIG. 3a to FIG. 3c, FIG. 3a to FIG. 3c are diagrams of an SBFD dedicated uplink-downlink slot configuration. FIG. 3a is a possible example of XXXXX, FIG. 3b is a possible example of XXXXU, and FIG. 3c is a possible example of DXXXU. In this configuration method, uplink and downlink subbands configured on flexible symbols are invisible to a UE. In other words, the UE does not know frequency resource positions of the uplink and downlink subbands. In this case, if the UE determines to perform downlink transmission in a flexible symbol, a gNB should ensure that the UE is indicated to perform downlink reception only in a downlink subband configured on the flexible symbol. If the UE determines to perform uplink transmission in a flexible symbol, the gNB should ensure that the UE is indicated to perform uplink transmission only in an uplink subband configured on the flexible symbol.

### 7. Frequency hopping (frequency hopping, FH) and frequency hopping pattern (frequency hopping pattern)

A change in the frequency position to which data to be sent is mapped is known as frequency hopping. Generally, when frequency hopping is enabled, the frequency position to which the data is mapped changes over time. Frequency positions of data to be sent in different slots may be different. Frequency hopping obtains a frequency diversity gain for the communication system, thereby improving uplink transmission performance.

When frequency hopping is enabled, a set of frequency positions corresponding to different times and determined by a terminal device is called a frequency hopping pattern. The terminal device may transmit an uplink signal based on the frequency hopping pattern, which determines one or both of a time domain resource unit (for example, a symbol) and a frequency resource unit (for example, a subcarrier) for uplink transmission. The terminal device maps the uplink signal to a corresponding time domain resource unit and/or frequency resource unit for transmission. In the frequency hopping pattern, different time domain resource units may correspond to different frequency resource units.

### 8. Random access process

A random access process spans from when a terminal device sends a random access preamble (preamble) to attempt network access until a basic signaling connection is established with the network.

It should be noted that, before selecting a random access channel occasion (RACH occasion, RO) for sending the preamble, the terminal device selects an uplink carrier. For example, when a supplementary uplink (supplementary uplink, SUL) or a normal uplink (normal uplink, NUL) is configured, the terminal device may operate on the SUL or the NUL.

After selecting the uplink carrier, the terminal device (for example, the terminal device in an RRC connected state) may perform a bandwidth part BWP operation. For example, when no RO is configured in an active uplink BWP for the terminal device, the terminal device switches the active uplink BWP to an initial uplink BWP.

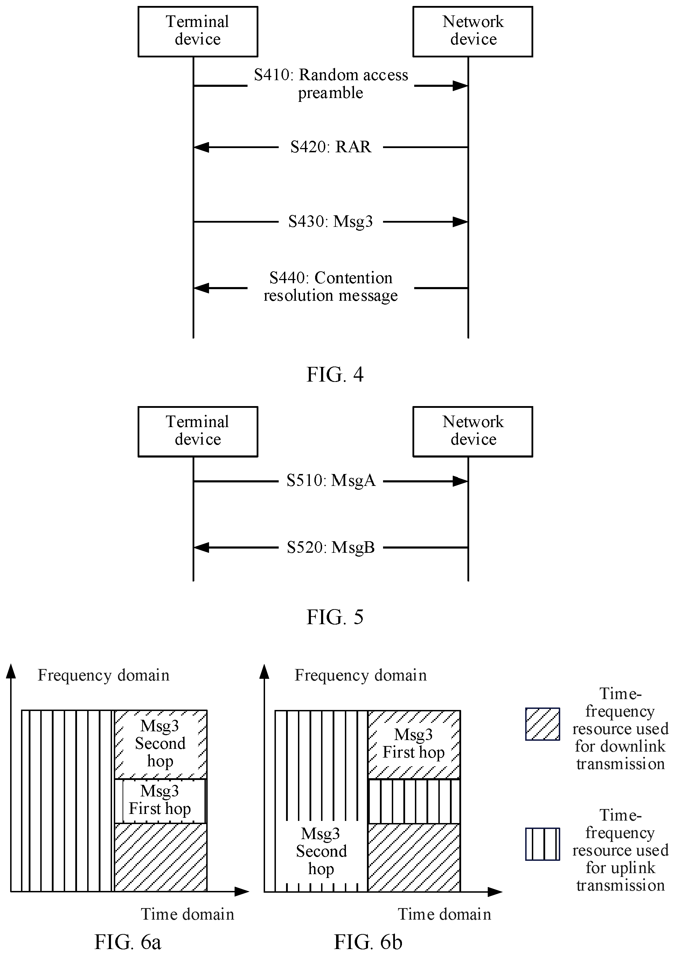

After selecting the uplink carrier or performing the BWP operation, the terminal device selects a random access (random access, RA) type, that is, whether to perform two-step random access (see FIG. 5) or four-step random access (see FIG. 4).

After determining the RA type, the terminal device selects a RACH resource. The terminal device may select an RO, which is for sending the preamble, based on the selected synchronization signal block (Synchronization Signal and PBCH block, SSB) and the mapping relationship between the SSB and the RO. Alternatively, the terminal device may select a preamble based on the selected SSB and the mapping relationship between the SSB and the preamble. For example, one SSB may correspond to a plurality of ROs, or a plurality of SSBs may be mapped to one RO. For another example, one SSB corresponds to one or more preambles, and different SSBs may use different preambles.

Currently, random access is mainly classified into two types: the four-step random access and the two-step random access. For ease of understanding, a four-step random access process and a two-step random access process are separately described with reference to FIG. 4 and FIG. 5.

FIG. 4 is a schematic flowchart of a four-step random access process. As shown in FIG. 4, the four-step random access process includes the following steps.

S410: A terminal device sends a random access preamble (preamble) to a network device. Correspondingly, the network device receives the random access preamble sent by the terminal device.

For example, the terminal device sends a random access preamble, namely, a Msg1, to the network device on a physical random access channel (physical random access channel, PRACH) resource. The PRACH resource may be understood as a random access channel occasion (RACH occasion, RO). It should be understood that, before step S410, the terminal device may obtain, by reading system broadcast information, a resource configuration for sending on a PRACH, where the resource configuration mainly includes time, a frequency, a preamble sequence, and the like. Therefore, the PRACH resource includes time, a frequency, an orthogonal code sequence resource, and the like.

S420: The network device sends a random access response (random access response, RAR) to the terminal device, and correspondingly, the terminal device receives the RAR from the network device.

For example, the network device sends a random access response RAR, namely, a Msg2, to the terminal device based on the random access preamble. The RAR may include indication information indicating an uplink resource used to send a message 3 (message 3, Msg3). This may be understood as: After receiving the RAR, the terminal device can learn of the uplink resource used to send the Msg3.

It should be understood that, before step S420 is performed, or in other words, after the terminal device sends the Msg1, the terminal device starts a random access response window, and monitors, in the window, the RAR sent by the network device. If the terminal device successfully detects the RAR of the terminal device, random access succeeds, and the terminal device may continue to send, based on an indication of the RAR, the Msg3, that is, step S430 is performed. If the UE does not receive the RAR of the UE, random access fails, and the terminal device re-initiates, based on a fallback parameter indicated by the network device, a random access process until a maximum quantity of random access times is reached.

S430: The terminal device sends a Msg3 to the network device, and correspondingly, the network device receives the Msg3 from the terminal device.

For example, the terminal device sends, based on the RAR, a Msg3. A main function of the Msg3 is to send an RRC connection setup request. The Msg3 may include layer 2 (layer 2, L2) information and/or layer 3 (layer 3, L3) information, for example, an RRC connection setup request message, and for another example, a beam failure recovery (beam failure recovery, BFR) MAC control element (control element, CE).

S440: The network device sends a contention resolution message to the terminal device, and correspondingly, the terminal device receives the contention resolution message from the network device.

The contention resolution message includes an identifier (identifier, ID) of the terminal device. Optionally, the contention resolution message may also be referred to as a message 4 (message 4, Msg4), and the Msg4 carries a contention resolution identifier and an air interface parameter configuration for the terminal device.

For example, if contention resolution for the terminal device succeeds, the network device sends the contention resolution message to the terminal device. If the terminal device successfully receives the Msg4, and the Msg4 carries a contention resolution identifier of the terminal device, random access succeeds; otherwise, random access fails. If the random access succeeds, the terminal device may continue to send a Msg5 (not shown in the figure). A main function of the Msg5 is to send an RRC setup complete command. If the random access fails, the terminal device re-initiates, based on a fallback parameter indicated by the network device, a random access process until a maximum quantity of random access times is reached.

Optionally, in response to a physical downlink shared channel (physical downlink shared channel, PDSCH) carrying the Msg4, the terminal device may send corresponding hybrid automatic repeat request-acknowledgment (hybrid automatic repeat request-acknowledgment, HARQ-ACK) information by using a physical uplink control channel (physical uplink control channel, PUCCH).

Further, when determining, based on the Msg3, that the random access is contention-based random access, the network device stores information about terminal devices requiring contention resolution. When resolving contention based on the Msg4, the network device performs contention resolution for these contending terminal devices.

It should be noted that FIG. 4 is merely a diagram provided for ease of describing the four-step random access process, and does not constitute any limitation on the protection scope of this application. For specific descriptions of the four-step random access process, refer to descriptions in a current related technology.

FIG. 5 is a schematic flowchart of a two-step random access process. As shown in FIG. 5, the two-step random access process includes the following steps.

S510: A terminal device sends a message A (message A, MsgA) to a network device, and correspondingly, the network device receives the message A from the terminal device.

The MsgA includes a preamble part and a physical uplink shared channel (physical uplink shared channel, PUSCH) part. The preamble part is sent on a PRACH resource (for example, the foregoing RO), and a PUSCH resource may carry L2 or L3 information, for example, a BFR MAC CE or an RRC connection setup request message.

S520: The network device sends a message B (message B, MsgB) to the terminal device, and correspondingly, the terminal device receives the message B from the network device.

The MsgB message may include a success RAR (success RAR) or a fallback RAR (fallback RAR).

For example, when the terminal device receives a fallback RAR, the terminal device needs to fall back to a four-step random access process, and send a Msg3 to the network device, that is, step S430 in FIG. 4 is performed.

Optionally, in addition to the foregoing fallback process from two-step random access to four-step random access, if the network device chooses to perform the two-step random access process when triggering random access, after a quantity of times of sending the preamble in the two-step random access process reaches a maximum quantity of sending times, the terminal device may further fall back (fallback) to the four-step random access process to attempt access, to increase an access success rate of the terminal device and ensure access performance of the terminal device.

Based on FIG. 4 and FIG. 5, the following specifically describes a Msg3 or MsgA PUSCH in steps S430 and S510, and PUCCH feedback for Msg4/MsgB PDSCH in S440 and S520.

### 1. Msg3 or MsgA PUSCH

It should be understood that the random access RA process is performed in a BWP, an uplink message is transmitted in an uplink BWP, and a downlink message is transmitted in a downlink BWP. The Msg3 is transmitted on a PUSCH scheduled by an RAR UL grant, where the RAR UL grant is carried in an RAR message. Optionally, the network device may further schedule a Msg3 retransmission PUSCH by using DCI scrambled by a TC-RNTI. An indication field included in the RAR UL grant and a corresponding size are shown in Table 1.

**Table 1**

| Indication field | Bit size |
|---|---|
| Frequency hopping flag (Frequency hopping flag) | 1 |
| PUSCH frequency resource allocation (PUSCH frequency resource allocation) | 12, for operation with shared spectrum channel access in FR1 or for FR2-2 when ChannelAccessMode2-r17 is provided; otherwise, 14 |
| PUSCH time resource allocation (PUSCH time resource allocation) | 4 |
| Modulation and coding scheme (Modulation and Coding Scheme, MCS) | 4 |
| TPC command for PUSCH | 3 |
| Channel state information (Channel State Information, CSI) request | 1 |
| Channel access ChannelAccess-CPext | 2, for operation with shared spectrum channel access in FR1 or for FR2-2 when ChannelAccessMode2-r17 is provided; otherwise, 0 |

For an initial uplink BWP with a size of ${N}_{BWP}^{size}$ RBs, the terminal device may process a frequency domain resource allocation (frequency domain resource allocation, FDRA) field as follows:
If ${N}_{BWP}^{size} < = 180$, the terminal device truncates the FDRA field to $\left⌈{log}_{2}\left({N}_{BWP}^{size}⋅\left({N}_{BWP}^{size}+1\right)/2\right)\right⌉$ least significant bits, and interprets the truncated FDRA field in the following manners:
   (1) for PUSCH frequency hopping transmission of a resource allocation type 1, *N_{UL_hop}* most significant bits indicate a frequency offset obtained based on Table 2, where if ${N}_{BWP}^{size} < 50$, *N_{UL_hop} =* 1; otherwise, *N_{UL_hop}* = 2 ; and $\left⌈{log}_{2}\left({N}_{BWP}^{size}⋅\left({N}_{BWP}^{size}+1\right)/2\right)\right⌉ - {N}_{UL _ hop}$ bits provide FDRA; and
   (2) for non-PUSCH frequency hopping transmission of a resource allocation type $\left⌈{log}_{2}\left({N}_{BWP}^{size}⋅\left({N}_{BWP}^{size}+1\right)/2\right)\right⌉$ bits provide FDRA.
If ${N}_{BWP}^{size} > 180$, in a shared spectrum access scenario, the terminal device inserts $\left⌈{log}_{2}\left({N}_{BWP}^{size}⋅\left({N}_{BWP}^{size}+1\right)/2\right)\right⌉ - 12$ most significant bits; otherwise, the terminal device inserts $\left⌈{log}_{2}\left({N}_{BWP}^{size}⋅\left({N}_{BWP}^{size}+1\right)/2\right)\right⌉ - 14$ most significant bits, for example, setting bits after *N_{UL-hop}* bits in the FDRA field to '0', where if a frequency hopping flag is set to '0', *N_{UL_hop}* = 0, or if the frequency hopping flag is set to '1', the value of *N_{UL_hop}* is shown in Table 2, and interpreting an FDRA field after insertion in the following manner. Table 2 shows a frequency offset value of a second hop of a PUSCH for frequency hopping transmission scheduled for a Msg3 or Msg3 retransmission.

**Table 2**

| Quantity of PRBs in initial UL BWP | *N_{UL_hop}* frequency hopping bit value | Frequency offset value of second hop |
|---|---|---|
| ${N}_{BWP}^{size} < 50$ | 0 | $\left⌊{N}_{BWP}^{size}/2\right⌋$ |
| | 1 | $\left⌊{N}_{BWP}^{size}/4\right⌋$ |
| ${N}_{BWP}^{size} \geq 50$ | 00 | $\left⌊{N}_{BWP}^{size}/2\right⌋$ |
| | 01 | $\left⌊{N}_{BWP}^{size}/4\right⌋$ |
| | 10 | $- \left⌊{N}_{BWP}^{size}/4\right⌋$ |
| | 11 | Reserved bit (Reserved) |

For example, frequency hopping transmission on a Msg3 PUSCH or a Msg3 retransmission PUSCH includes the following two types:
intra-slot frequency hopping when the Msg3 PUSCH or the Msg3 retransmission PUSCH is used for single-slot transmission; and
inter-slot frequency hopping when the Msg3 PUSCH or the Msg3 retransmission PUSCH is used for multi-slot repeated transmission.

For the intra-slot frequency hopping, a start RB of each hop is determined according to Formula (1): ${RB}_{start} = \left\{\begin{matrix}{RB}_{start} & i = 0 \\ \left({RB}_{start}+{RB}_{offset}\right) mod {N}_{BWP}^{size} & i = 1\end{matrix}\right.$

*i* = 0 and *i* = 1 are respectively a first hop and a second hop, and RBₛₜₐᵣₜ is a start RB in a UL BWP.

For the inter-slot frequency hopping, a start RB in ${n}_{s}^{μ}$ is determined according to Formula (2): ${RB}_{start} \left({n}_{s}^{μ}\right) = \left\{\begin{matrix}{RB}_{start} & {n}_{s}^{μ} mod 2 = 0 \\ \left({RB}_{start}+{RB}_{offset}\right) mod {N}_{BWP}^{size} & {n}_{s}^{μ} mod 2 = 1\end{matrix}\right.$${n}_{s}^{μ}$ is a number of a current slot that is in a system frame and in which a PUSCH for multi-slot transmission occurs, and *RBₛₜₐᵣₜ* is a start RB in a UL BWP.

Currently, transmission on a Msg3 or MsgA PUSCH is supported in SBFD symbols/slots.

FIG. 6a and FIG. 6b are diagrams of transmission on a Msg3 PUSCH or Msg3 retransmission PUSCH in an SBFD slot/symbol.

As shown in FIG. 6a, for single-slot transmission, when Msg3 PUSCH frequency hopping is disabled, the network device may schedule the Msg3 PUSCH in an uplink subband of an SBFD symbol/slot. When Msg3 PUSCH frequency hopping is enabled, because the frequency offset value of the second hop is ${N}_{BWP}^{size} / 2$ or ${N}_{BWP}^{size} / 4$, a frequency of the second hop of the Msg3 PUSCH may fall outside an uplink subband, that is, fall within a downlink subband. As a result, the second hop of the Msg3 PUSCH is unavailable for transmission.

As shown in FIG. 6b, for multi-slot transmission across SBFD symbols/slots and non-SBFD symbols/slots, uplink resource ranges differ between the two types of symbols/slots. When Msg3 PUSCH frequency hopping is enabled, a frequency of the first hop of the Msg3 PUSCH may fall outside an uplink subband, that is, fall within a downlink subband. As a result, the first hop of the Msg3 PUSCH is unavailable for transmission.

### 2. PUCCH feedback for Msg4/MsgB PDSCH

For example, the terminal device feeds back HARQ-ACK information of a Msg4/MsgB PDSCH to the network device by using a common PUCCH resource. The common PUCCH resource is a PUCCH resource that is used by all users in a cell before the network device configures a dedicated PUCCH resource for the users. After the terminal device enters an RRC connected state, the network device may further configure a dedicated PUCCH resource for the terminal device.

Currently, it is defined in a protocol that common PUCCH resources are configured in a form of set. A common PUCCH resource set includes a total of 16 PUCCH resources. One UE uses one PUCCH resource in one PUCCH transmission. In addition, the protocol further specifies that common PUCCH resources support intra-slot PUCCH frequency hopping by default. In a non-shared spectrum scenario, the terminal device may determine an RB position of a common PUCCH resource according to the following method. For example,
(1) if $\left⌊{r}_{PUCCH}/8\right⌋ = 0$,
   an RB index (index) of a first hop of PUCCH transmission is: ${RB}_{BWP}^{offset} ⋅ {N}_{RB} + \left⌊{r}_{PUCCH}/{N}_{CS}\right⌋ ⋅ {N}_{RB}$ ; and
   an RB index of a second hop of PUCCH transmission is: ${N}_{BWP}^{size} - {RB}_{BWP}^{offset} ⋅ {N}_{RB} - \left(1+\left⌊{r}_{PUCCH}/{N}_{CS}\right⌋\right) ⋅ {N}_{RB}$ ; or
(2) if $\left⌊{r}_{PUCCH}/8\right⌋ = 1$,
   the RB index of the first hop of PUCCH transmission is: ${N}_{BWP}^{size} - {RB}_{BWP}^{offset} ⋅ {N}_{RB} - \left(1+\left⌊\left({r}_{PUCCH}-8\right)/{N}_{CS}\right⌋\right) ⋅ {N}_{RB}$ ; and
   the RB index of the second hop of PUCCH transmission is: ${RB}_{BWP}^{offset} ⋅ {N}_{RB} + \left⌊\left({r}_{PUCCH}-8\right)/{N}_{CS}\right⌋ ⋅ {N}_{RB}$

*r*_{PUCCH} is a PUCCH resource index, and indicates one of 16 PUCCH resources, ${RB}_{BWP}^{offset}$ is an RB offset, ${N}_{BWP}^{size}$ is a size of a UL BWP, namely, a quantity of RBs included in the UL BWP, and *N_{CS}* is a total quantity of initial cyclic shift indexes in an initial cyclic shift index set.

Currently, transmission on the PUCCH feedback for Msg4/MsgB PDSCH is supported in SBFD symbols/slots.

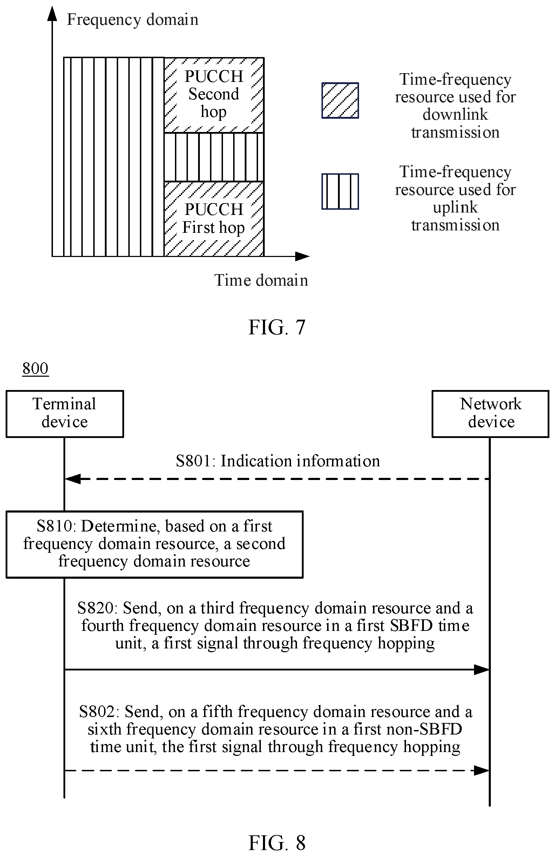

FIG. 7 is a diagram of PUCCH feedback for Msg4/MsgB PDSCH in an SBFD slot/symbol. As shown in FIG. 7, PUCCH resources used by the terminal device to feed back the HARQ-ACK information of the Msg4/MsgB PDSCH are at two ends of a UL BWP. Due to inconsistency between a frequency range of the uplink subband of the SBFD symbol/slot and that of the UL BWP, frequencies of two hops of the PUCCH may fall outside a range of the uplink subband. For example, the first hop of the PUCCH and the second hop of the PUCCH fall within the downlink subband. As a result, the PUCCH is unavailable for transmission.

In conclusion, in a process of performing random access in an SBFD symbol/slot, transmission on an uplink channel, for example, a Msg3 PUSCH or a Msg3 retransmission PUSCH, and transmission on PUCCH feedback for Msg4/MsgB PDSCH may occur in a downlink subband of the SBFD symbol/slot. As a result, uplink channel transmission cannot be performed normally, and uplink transmission performance is affected.

To resolve the foregoing technical problem, this application provides a communication method and a communication apparatus, so that uplink channel transmission falls within an uplink frequency domain resource in an SBFD time unit, transmission performance of an uplink channel is ensured, and a success rate of random access performed by a terminal device in the SBFD time unit is improved.

With reference to the accompanying drawings, the following describes in detail the communication method provided in embodiments of this application. Embodiments provided in this application are applicable to the communication system shown in FIG. 1. With reference to FIG. 8, the technical solution of this application is specifically described. An execution body may be a sending device or a receiving device, or may be a chip or a circuit used in the sending device or the receiving device. The sending device may be a terminal device, a chip or a circuit in the terminal device, or a functional module that is in the terminal device and that can invoke and execute a program. The receiving device may be a network device, a chip or a circuit in the network device, a CU or a distributed unit DU in the network device, or a functional module that is in the network device and that can invoke and execute a program. For ease of description, the following uses an example in which the communication method is performed by the terminal device and the network device for description.

FIG. 8 is a schematic flowchart of a communication method according to an embodiment of this application. As shown in FIG. 8, the method includes a plurality of steps as follows.

S810: A terminal device determines, based on a first frequency domain resource, a second frequency domain resource.

The first frequency domain resource is a frequency domain resource in an overlap between a first uplink BWP and a first uplink subband. Sizes and positions of the first uplink BWP and the first uplink subband are not specifically limited in this application.

Optionally, the first frequency domain resource is configured or preconfigured (preconfigured). It should be understood that preconfiguration is defining or configuring the first frequency domain resource in advance in a protocol manner, and information about the first frequency domain resource may be stored in the terminal device during communication with the terminal device. For example, the preconfiguration is implemented by pre-storing corresponding code or a corresponding table in the terminal device, or is implemented in another manner that may indicate the first frequency domain resource. It should be understood that configuration may be signaling configuration, or may be described as configuration signaling. The signaling configuration may be performed by a second apparatus (for example, a network device) by sending signaling. The signaling may be a radio resource control (radio resource control, RRC) message, downlink control information (downlink control information, DCI), or a system information block (system information block, SIB). For example, the network device may dynamically configure (dynamically configure) the first frequency domain resource by using signaling or a message. Optionally, before step S810 is performed, the method further includes step S801.

S801: A network device sends indication information to the terminal device, and correspondingly, the terminal device receives the indication information from the network device.

For example, the indication information indicates the first uplink BWP and the first uplink subband. In other words, the terminal device may determine, based on the received indication information, the first uplink BWP and the first uplink subband, and then determine the first frequency domain resource based on the first uplink BWP and the first uplink subband, and thus determine the second frequency domain resource used for uplink channel transmission. In this way, it is ensured that the uplink channel transmission falls within an uplink frequency domain resource in an SBFD time unit, thereby ensuring transmission performance of an uplink channel.

The second frequency domain resource includes a third frequency domain resource and a fourth frequency domain resource, and the third frequency domain resource and the fourth frequency domain resource are used to send a first signal. Optionally, a quantity of third frequency domain resources or fourth frequency domain resources is not limited in this application. For example, there may be one or more third frequency domain resources or fourth frequency domain resources.

Optionally, the second frequency domain resource may further include a fifth frequency domain resource and a sixth frequency domain resource, and the fifth frequency domain resource and the sixth frequency domain resource are used to send the first signal.

It should be understood that the second frequency domain resource includes a frequency domain resource in an SBFD time unit, namely, the third frequency domain resource and the fourth frequency domain resource. In other words, the first signal may be sent on a time-frequency resource including the SBFD time unit and the second frequency domain resource. It should be further understood that the second frequency domain resource further includes a frequency domain resource in a non-SBFD time unit, namely, the fifth frequency domain resource and the sixth frequency domain resource. In other words, the first signal may be sent on a time-frequency resource including the non-SBFD time unit and the second frequency domain resource.

The following describes a specific implementation in which the terminal device determines, based on the first frequency domain resource, the second frequency domain resource.

### Manner 1

In an SBFD time unit, for a Msg3 PUSCH single-slot transmission or Msg3 PUSCH multi-slot transmission scenario, a frequency domain resource (for example, the third frequency domain resource and the fourth frequency domain resource) of a Msg3 may be determined based on Table 3. For example, Table 3 shows a correspondence, in an SBFD time unit, between a frequency hopping bit value in an FDRA field in an RAR UL grant and a frequency offset value of a second hop. It should be noted that the frequency offset value of the second hop is relative to a frequency domain position at which the terminal device is currently located, or may be understood as a frequency offset that needs to occur relative to the frequency domain position at which the terminal device is currently located.

**Table 3**

| Quantity of PRBs in UL BWP | *N_{UL_hop}* frequency hopping bit value | Frequency offset value of second hop |
|---|---|---|
| ${N}_{BWP}^{size} ′ < 50$ | 0 | $\left⌊{N}_{BWP}^{size}′/2\right⌋$ |
| | 1 | $\left⌊{N}_{BWP}^{size}′/4\right⌋$ |
| ${N}_{BWP}^{size} ′ \geq 50$ | 00 | $\left⌊{N}_{BWP}^{size}′/2\right⌋$ |
| | 01 | $\left⌊{N}_{BWP}^{size}′/4\right⌋$ |
| | 10 | $- \left⌊{N}_{BWP}^{size}′/4\right⌋$ |
| | 11 | Reserved bit (Reserved) |

It can be learned from Table 3 that frequency offset values of the second hop may be correspondingly determined based on different frequency hopping bit values, and thus a frequency domain position of the third frequency domain resource or the fourth frequency domain resource in the SBFD time unit may be determined. For example, for ${N}_{BWP}^{size} ′ < 50$, where ${N}_{BWP}^{size} ′$ is a quantity of RBs included in the first frequency domain resource, when the *N_{UL_hop}* frequency hopping bit value is 1, it indicates that the frequency offset value of the second hop is $\left⌊{N}_{BWP}^{size}′/4\right⌋$, that is, for a next hop, the terminal device needs a frequency offset of $\left⌊{N}_{BWP}^{size}′/4\right⌋$ occurring in frequency domain.

Optionally, the terminal device may process the FDRA field in the RAR UL grant in the following manners.

In an example, when ${N}_{BWP}^{size} ′ < = 180$, the terminal device may truncate a frequency domain resource allocation (frequency domain resource allocation, FDRA) field to *m* least significant bits, where $m = \left⌈{log}_{2}\left({N}_{BWP}^{size}′⋅\left({N}_{BWP}^{size}′+1\right)/2\right)\right⌉$, and determine, based on the m least significant bits, the third frequency domain resource and the fourth frequency domain resource, where *m* is a positive integer. ${N}_{BWP}^{size} ′$ represents a quantity of RBs included in the first frequency domain resource, ┌ ┐ represents rounding up, and log represents taking a logarithm.

In another example, when ${N}_{BWP}^{size} ′ > 180$, n most significant bits are inserted into the FDRA field, where $n = \left⌈{log}_{2}\left({N}_{BWP}^{size}′⋅\left({N}_{BWP}^{size}′+1\right)/2\right)\right⌉ - 12$, and the third frequency domain resource and the fourth frequency domain resource are determined based on an FDRA field into which the *n* most significant bits are inserted, where *n* is a positive integer.

In still another example, when ${N}_{BWP}^{size} ′ > 180$, p most significant bits are inserted into the FDRA field, where $p = \left⌈{log}_{2}\left({N}_{BWP}^{size}′⋅\left({N}_{BWP}^{size}′+1\right)/2\right)\right⌉ - 14$, and the third frequency domain resource and the fourth frequency domain resource are determined based on an FDRA field into which the *p* most significant bits are inserted, where ${N}_{BWP}^{size} ′$ indicates a quantity of RBs included in the first frequency domain resource, and *p* is a positive integer.

Optionally, a bit that is in the FDRA field and that indicates frequency domain resource allocation is processed in the following manners.

In an example, when $\left({L}_{RBs}-1\right) \leq \left⌊{N}_{BWP}^{size}′/2\right⌋$*,* an RIV in a current FDRA field satisfies: $RIV = {N}_{BWP}^{size} ′ \left({L}_{RBs}-1\right) + \left({RB}_{start}-{RB}_{offset}\right)$

In another example, when $\left({L}_{RBs}-1\right) > \left⌊{N}_{BWP}^{size}′/2\right⌋$*,* the RIV in the current FDRA field satisfies: $RIV = {N}_{BWP}^{size} ′ \left({N}_{BWP}^{size}′+{L}_{RBs}+1\right) + \left({N}_{BWP}^{size}′-1-\left({RB}_{start}-{RB}_{offset}\right)\right)$

*L_{RBs}* represents a quantity of RBs included in the third frequency domain resource or the fourth frequency domain resource, RBₛₜₐᵣₜ represents a start RB of the third frequency domain resource or a start RB of the fourth frequency domain resource, *RB_{offset}* represents a frequency offset between a start RB of the first frequency domain resource and a start RB of the first uplink BWP, ${N}_{BWP}^{size} ′$ represents the quantity of RBs included in the first frequency domain resource, and └ ┘ represents rounding down.

It should be understood that the current FDRA field may be a latest FDRA field. For example, the current FDRA field is an FDRA field that is truncated to *m* least significant bits, may be an FDRA field into which *n* most significant bits are inserted, or may be an FDRA field into which *p* most significant bits are inserted. An FDRA field before truncation to *m* least significant bits, an FDRA field before insertion of *n* most significant bits, or an FDRA field before insertion of *p* most significant bits may be understood as an FDRA field defined in an existing standard.

It should be noted that, in this application, when A and B are compared, a specific implementation of the description "when A is less than or equal to B, C is performed or D is satisfied; or when A is greater than B, E is performed or F is satisfied" may be replaced with "when A is less than B, C is performed or D is satisfied; or when A is greater than or equal to B, E is performed or F is satisfied". In other words, when A is equal to B, any case may be selected for execution. This is not limited in this application.

### Manner 2

In an implementation, that the terminal device determines, based on the first frequency domain resource, the second frequency domain resource includes: The terminal device determines, based on the fifth frequency domain resource, the sixth frequency domain resource, and a first frequency offset, frequency domain positions of the third frequency domain resource and the fourth frequency domain resource. The first frequency offset represents a frequency offset between a start RB of the first frequency domain resource and a start RB of the first uplink BWP.

Optionally, the fifth frequency domain resource and the sixth frequency domain resource may be determined based on an existing FDRA field, that is, a frequency offset value between the fifth frequency domain resource and the sixth frequency domain resource is determined based on a frequency hopping indication bit in an FDRA field.

It should be understood that, that the terminal device determines, based on the fifth frequency domain resource, the sixth frequency domain resource, and the first frequency offset, the frequency domain positions of the third frequency domain resource and the fourth frequency domain resource may be understood as: The frequency domain positions of the third frequency domain resource and the fourth frequency domain resource are obtained by adding the first frequency offset to frequency domain positions of the fifth frequency domain resource and the sixth frequency domain resource, respectively, that is, the third frequency domain resource and the fourth frequency domain resource may be obtained by respectively offsetting, in frequency domain, the fifth frequency domain resource and the sixth frequency domain resource by the first frequency offset.

In other words, for a scenario in which transmission on a Msg3 PUSCH is in a plurality of time units (for example, including an SBFD time unit and a non-SBFD time unit), an example in which a time unit is a slot is used. When inter-slot frequency hopping (inter-slot FH) is enabled, a frequency domain position (for example, the fifth frequency domain resource or the sixth frequency domain resource) of the Msg3 in a non-SBFD slot may be determined based on the FDRA field, and a frequency domain position (for example, the third frequency domain resource or the fourth frequency domain resource) of the Msg3 in an SBFD slot is obtained based on a frequency domain position of the Msg3 in the non-SBFD slot and the first frequency offset.

For example, a start RB of the second frequency domain resource in the non-SBFD time unit and the SBFD time unit may be determined according to Formula (9): $\begin{matrix}{RB}_{start} \left({n}_{s}^{μ}\right) \\ = \left\{\begin{matrix}{RB}_{start} & {n}_{s}^{μ} mod 2 = 0 , {n}_{s}^{μ} is the first non - SBFD time unit \\ {RB}_{start} mod {N}_{BWP}^{size} ′ + {RB}_{offset} & {n}_{s}^{μ} mod 2 = 0 , {n}_{s}^{μ} is the first SBFD time unit \\ \left({RB}_{start}+{RB}_{offset 1}\right) {modN}_{BWP}^{size} & {n}_{s}^{μ} mod 2 = 1 , {n}_{s}^{μ} is the first non - SBFD time unit \\ \left({RB}_{start} mod {N}_{BWP}^{size}′+{RB}_{offset}+{RB}_{offset 2}\right) {modN}_{BWP}^{size} ′ + {RB}_{offset} & {n}_{s}^{μ} mod 2 = 1 , {n}_{s}^{μ} is the first SBFD time unit\end{matrix}\right.\end{matrix}$${n}_{s}^{μ}$ represents the first SBFD time unit or the first non-SBFD time unit, *RBₛₜₐᵣₜ* represents a start RB of the fifth frequency domain resource or a start RB of the sixth frequency domain resource, *RB_{offset}* represents the first frequency offset, ${N}_{BWP}^{size} ′$ represents a quantity of RBs included in the first frequency domain resource, ${N}_{BWP}^{size}$ represents a quantity of RBs included in the first uplink BWP, *RB*_{*offset*1} represents a frequency offset between the start RB of the fifth frequency domain resource and the start RB of the sixth frequency domain resource, *RB*_{*offset*2} represents a frequency offset between a start RB of the third frequency domain resource and a start RB of the fourth frequency domain resource, and mod represents a modulo operation.

In an example, *RB*_{*offset*1} and *RB*_{*offset*2} in Formula (9) may be separately determined based on Table 4 and Table 5. Table 4 shows a correspondence, in a non-SBFD time unit, between a frequency hopping bit value and a frequency offset value of a second hop. Table 5 shows a correspondence, in an SBFD time unit, between a frequency hopping bit value and a frequency offset value of a second hop.

**Table 4**

| Quantity of PRBs in UL BWP | *N_{UL_hop}* frequency hopping bit value | Frequency offset value of second hop |
|---|---|---|
| ${N}_{BWP}^{size} < 50$ | 0 | $\left⌊{N}_{BWP}^{size}/2\right⌋$ |
| | 1 | $\left⌊{N}_{BWP}^{size}/4\right⌋$ |
| ${N}_{BWP}^{size} \geq 50$ | 00 | $\left⌊{N}_{BWP}^{size}/2\right⌋$ |
| | 01 | $\left⌊{N}_{BWP}^{size}/4\right⌋$ |
| | 10 | $- \left⌊{N}_{BWP}^{size}/4\right⌋$ |
| | 11 | Reserved bit (Reserved) |

It can be learned from Table 4 that frequency offset values of the second hop may be correspondingly determined based on different frequency hopping bit values, and thus a frequency domain position of the fifth frequency domain resource or the sixth frequency domain resource in the non-SBFD time unit may be determined. For example, for ${N}_{BWP}^{size} < 50$, where ${N}_{BWP}^{size}$ is a quantity of RBs included in the first uplink BWP, when the *N_{UL_hop}* frequency hopping bit value is 0, it indicates that the frequency offset value of the second hop is $\left⌊{N}_{BWP}^{size}/2\right⌋$, that is, for a next hop, the terminal device needs a frequency offset of $\left⌊{N}_{BWP}^{size}/2\right⌋$ occurring in frequency domain.

**Table 5**

| Quantity of PRBs in UL BWP | *N_{UL_hop}* frequency hopping bit value | Frequency offset value of second hop |
|---|---|---|
| ${N}_{BWP}^{size} ′ < 50$ | 0 | $\left⌊{N}_{BWP}^{size}′/2\right⌋$ |
| | 1 | $\left⌊{N}_{BWP}^{size}′/4\right⌋$ |
| ${N}_{BWP}^{size} ′ \geq 50$ | 00 | $\left⌊{N}_{BWP}^{size}′/2\right⌋$ |
| | 01 | $\left⌊{N}_{BWP}^{size}′/4\right⌋$ |
| | 10 | $- \left⌊{N}_{BWP}^{size}′/4\right⌋$ |
| | 11 | Reserved bit (Reserved) |

It can be learned from Table 5 that frequency offset values of the second hop may be correspondingly determined based on different frequency hopping bit values, and thus a frequency domain position of the third frequency domain resource or the fourth frequency domain resource in the SBFD time unit may be determined. For example, for ${N}_{BWP}^{size} ′ < 50$, where ${N}_{BWP}^{size} ′$ is a quantity of RBs included in the first frequency domain resource, when the *N_{UL_hop}* frequency hopping bit value is 1, it indicates that the frequency offset value of the second hop is $\left⌊{N}_{BWP}^{size}′/4\right⌋$, that is, for a next hop, the terminal device needs a frequency offset of $\left⌊{N}_{BWP}^{size}′/4\right⌋$ occurring in frequency domain.

In other words, frequency domain resources in a non-SBFD time unit and an SBFD time unit may be determined according to Formula (9). For example, the fifth frequency domain resource and the sixth frequency domain resource may be determined according to the first formula and the third formula in Formula (9), and the third frequency domain resource and the fourth frequency domain resource may be determined according to the second formula and the fourth formula. It can be learned that the third frequency domain resource and the fourth frequency domain resource in the SBFD time unit may be considered as being obtained by adding the first frequency offset to the fifth frequency domain resource and the sixth frequency domain resource, and the first frequency offset is defined, so that uplink channel transmission falls within an uplink frequency domain resource in the SBFD time unit, normal uplink channel transmission is ensured, and a success rate of random access performed by the terminal device in the SBFD time unit is improved.

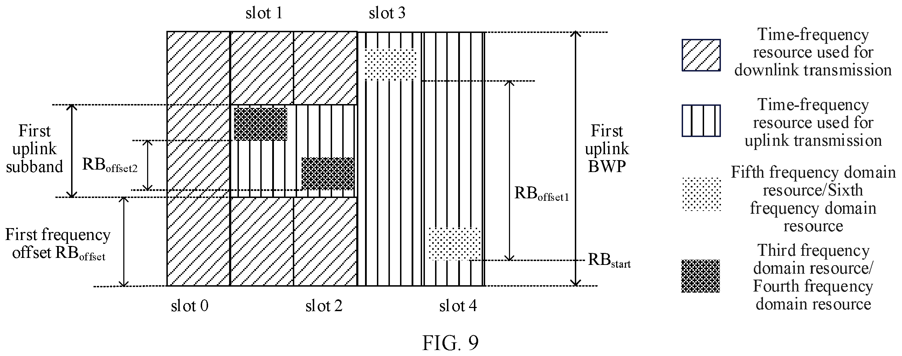

FIG. 9 is a diagram of transmission on a Msg3 PUSCH according to this application. As shown in FIG. 9, a horizontal axis may be considered as a time domain resource, and a vertical axis may be considered as a frequency domain resource. An example in which a time unit is a slot, a frequency domain unit is an RB, and transmission on the Msg3 PUSCH is inter-slot frequency hopping transmission is used. The time domain resource includes a slot 0, a slot 1, a slot 2, a slot 3, and a slot 4. The slot 1 and the slot 2 are SBFD slots. The slot 3 and the slot 4 are uplink non-SBFD slots. The third frequency domain resource and the fourth frequency domain resource are located in the slot 1 and the slot 2. The fifth frequency domain resource and the sixth frequency domain resource are located in the slot 3 and the slot 4. The frequency offset between the start RB of the third frequency domain resource and the start RB of the fourth frequency domain resource is RB_{offset2}. The frequency offset between the start RB of the fifth frequency domain resource and the start RB of the sixth frequency domain resource is RB_{offset1}. A frequency offset between a start RB of the first uplink subband and the start RB of the first uplink BWP is a first frequency offset RB_{offset}. For ease of description, it is assumed that the third frequency domain resource is located in the slot 1, the fourth frequency domain resource is located in the slot 2, the fifth frequency domain resource is located in the slot 3, and the sixth frequency domain resource is located in the slot 4. Therefore, after determining the third frequency domain resource, the fourth frequency domain resource, the fifth frequency domain resource, and the sixth frequency domain resource, the terminal device may send, sequentially on the third frequency domain resource, the fourth frequency domain resource, the fifth frequency domain resource, and the sixth frequency domain resource, the Msg3 PUSCH to the network device through frequency hopping.

### Manner 3

In an implementation, that the terminal device determines, based on the first frequency domain resource, the second frequency domain resource includes: The terminal device determines, based on the fifth frequency domain resource, the sixth frequency domain resource, and a first coefficient, frequency domain positions of the third frequency domain resource and the fourth frequency domain resource, where the first coefficient *α* satisfies: $α = {N}_{BWP}^{size} ′ / {N}_{BWP}^{size}$. ${N}_{BWP}^{size} ′$ represents a quantity of RBs included in the first frequency domain resource, and ${N}_{BWP}^{size}$ represents a quantity of RBs included in the first uplink BWP.

The first coefficient may also be referred to as a scaling factor, that is, *α* is positive number, and *α* may be greater than or equal to 1, or may be less than or equal to 1. This is not limited in this application.

Optionally, the fifth frequency domain resource and the sixth frequency domain resource may be determined based on an existing FDRA field, that is, a frequency offset value between the fifth frequency domain resource and the sixth frequency domain resource is determined based on a frequency hopping indication bit in an FDRA field.

In other words, for a scenario in which transmission on a Msg3 PUSCH is in a plurality of time units (for example, including an SBFD time unit and a non-SBFD time unit), an example in which a time unit is a slot is used. When inter-slot frequency hopping (inter-slot FH) is enabled, a frequency domain position (for example, the fifth frequency domain resource or the sixth frequency domain resource) of the Msg3 in a non-SBFD slot may be determined based on the FDRA field, and a frequency domain position (for example, the third frequency domain resource or the fourth frequency domain resource) of the Msg3 in an SBFD slot is obtained based on a frequency domain position of the Msg3 in the non-SBFD slot and the first coefficient.

For example, a start RB of the second frequency domain resource in the non-SBFD time unit and the SBFD time unit may be determined according to Formula (10): $\begin{matrix}{RB}_{start} \left({n}_{s}^{μ}\right) \\ = \left\{\begin{matrix}{RB}_{start} \\ \left⌊{RB}_{start}∗α\right⌋ + {RB}_{offset} \\ \left({RB}_{start}+{RB}_{offset 1}\right) {modN}_{BWP}^{size} \\ \left⌊\left({RB}_{start}+{RB}_{offset 1}\right){modN}_{BWP}^{size}∗α\right⌋ + {RB}_{offset}\end{matrix} \begin{matrix}{n}_{s}^{μ} mod 2 = 0 , {n}_{s}^{μ} is the first non - SBFD time unit \\ {n}_{s}^{μ} mod 2 = 0 , {n}_{s}^{μ} is the first SBFD time unit \\ {n}_{s}^{μ} mod 2 = 1 , {n}_{s}^{μ} is the first non - SBFD time unit \\ {n}_{s}^{μ} mod 2 = 1 , {n}_{s}^{μ} is the first SBFD time unit\end{matrix}\right.\end{matrix}$${n}_{s}^{μ}$ represents the first SBFD time unit or the first non-SBFD time unit, RBₛₜₐᵣₜ represents a start RB of the fifth frequency domain resource or a start RB of the sixth frequency domain resource, *RB_{offset}* represents a frequency offset between a start RB of the first frequency domain resource and a start RB of the first uplink BWP, *RB*_{*offset*1} represents a frequency offset between the start RB of the fifth frequency domain resource and the start RB of the sixth frequency domain resource, mod represents a modulo operation, and └┘ represents rounding down.

It should be noted that *RB*_{*offset*1} in Formula (10) may be determined based on Table 4. Methods for determining the fifth frequency domain resource and the sixth frequency domain resource in the non-SBFD time unit in the foregoing manner 2 and manner 3 are the same.

In other words, frequency domain resources in a non-SBFD time unit and an SBFD time unit may be determined according to the foregoing formula. For example, the fifth frequency domain resource and the sixth frequency domain resource may be determined according to the first formula and the third formula in Formula (10), and the third frequency domain resource and the fourth frequency domain resource may be determined according to the second formula and the fourth formula. It can be learned that the third frequency domain resource and the fourth frequency domain resource in the SBFD time unit may be considered as being obtained by processing the fifth frequency domain resource and the sixth frequency domain resource based on the first coefficient, and the first coefficient is defined, so that uplink channel transmission falls within an uplink frequency domain resource in the SBFD time unit, normal uplink channel transmission is ensured, and in turn a success rate of random access performed by the terminal device in the SBFD time unit is improved.

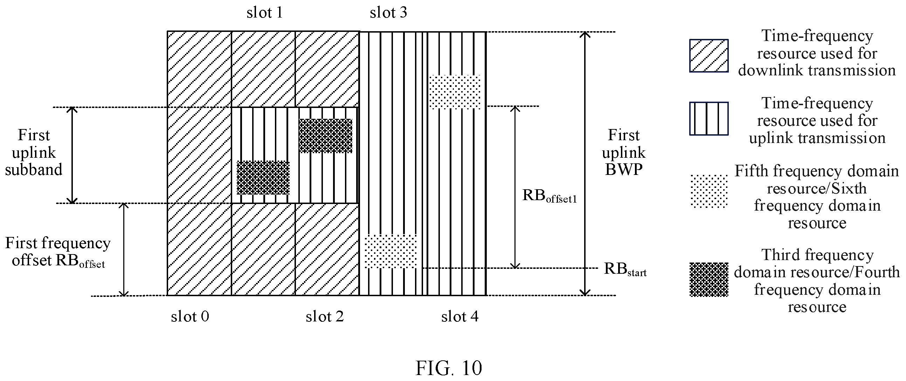

FIG. 10 is a diagram of transmission on a Msg3 PUSCH according to this application. As shown in FIG. 10, a horizontal axis may be considered as a time domain resource, and a vertical axis may be considered as a frequency domain resource. An example in which a time unit is a slot, a frequency domain unit is an RB, and transmission on the Msg3 PUSCH is inter-slot frequency hopping transmission is used. The time domain resource includes a slot 0, a slot 1, a slot 2, a slot 3, and a slot 4. The slot 1 and the slot 2 are SBFD slots. The slot 3 and the slot 4 are uplink non-SBFD slots. The third frequency domain resource and the fourth frequency domain resource are located in the slot 1 and the slot 2. The fifth frequency domain resource and the sixth frequency domain resource are located in the slot 3 and the slot 4. The frequency offset between the start RB of the fifth frequency domain resource and the start RB of the sixth frequency domain resource is RB_{offset1}. A frequency offset between a start RB of the first uplink subband and the start RB of the first uplink BWP is a first frequency offset RB_{offset}. For ease of description, it is assumed that the third frequency domain resource is located in the slot 1, the fourth frequency domain resource is located in the slot 2, the fifth frequency domain resource is located in the slot 3, and the sixth frequency domain resource is located in the slot 4. Therefore, after determining the third frequency domain resource, the fourth frequency domain resource, the fifth frequency domain resource, and the sixth frequency domain resource, the terminal device may send, sequentially on the third frequency domain resource, the fourth frequency domain resource, the fifth frequency domain resource, and the sixth frequency domain resource, the Msg3 PUSCH to the network device through frequency hopping.

### Manner 4

In an implementation, that the terminal device determines, based on the first frequency domain resource, the second frequency domain resource includes: The terminal device determines, based on a first frequency offset and a second frequency offset, a frequency domain position of the third frequency domain resource and a frequency domain position of the fourth frequency domain resource. The first frequency offset is a frequency offset between a start RB of the first frequency domain resource and a start RB of the first uplink BWP, and the second frequency offset is a frequency offset between an end RB of the first uplink BWP and an end RB of the first frequency domain resource.

In other words, for a scenario in which transmission on a PUCCH for Msg4/MsgB PDSCH is in a plurality of time units (for example, including an SBFD time unit), an example in which a time unit is a slot is used. When inter-slot frequency hopping (inter-slot FH) is enabled, the frequency domain position of the third frequency domain resource and the frequency domain position of the fourth frequency domain resource may be determined based on the first frequency offset and the second frequency offset, so that uplink channel transmission falls within an uplink frequency domain resource in the SBFD time unit, normal uplink channel transmission is ensured, and a success rate of random access performed by the terminal device in the SBFD time unit is improved.

In an example, when $\left⌊{r}_{PUCCH}/8\right⌋ = 0$, a frequency domain position of a PRB of the third frequency domain resource satisfies: $PRB index = {RB}_{BWP}^{offset} ⋅ {N}_{RB} + \left⌊{r}_{PUCCH}/{N}_{CS}\right⌋ ⋅ {N}_{RB} + {RB}_{offset}$

A frequency domain position of a lowest PRB of the fourth frequency domain resource satisfies: $PRB index = {N}_{BWP}^{size} - {RB}_{BWP}^{offset} ⋅ {N}_{RB} - \left(1+\left⌊{r}_{PUCCH}/{N}_{CS}\right⌋\right) ⋅ {N}_{RB} - {RB}_{offset 3}$

*r*_{PUCCH} represents a resource index of the PUCCH, ${RB}_{BWP}^{offset}$ represents a frequency offset of an RB in the first uplink BWP, ${N}_{BWP}^{size}$ represents a quantity of RBs included in the first uplink BWP, *N_{CS}* is a quantity of initial cyclic shift indexes in an initial cyclic shift index set, *RB_{offset}* represents the first frequency offset, *RB*_{*offset*3} represents the second frequency offset, └┘ represents rounding down, and *N_{RB}* represents a quantity of RBs.

It should be understood that the resource index of the PUCCH indicates a PUCCH resource. Currently, it is defined in a protocol that common PUCCH resources are configured in a form of set. A common PUCCH resource set includes a total of 16 PUCCH resources, and one UE uses one PUCCH resource in one PUCCH transmission. Therefore, the resource index of the PUCCH indicates one of the 16 PUCCH resources.

It may be understood that, when $\left⌊{r}_{PUCCH}/8\right⌋ = 0$, Formula (11) and Formula (12) are used to determine frequency domain positions of first eight PUCCH resources of the 16 PUCCH resources included in the common PUCCH resource set.

In another example, when $\left⌊{r}_{PUCCH}/8\right⌋ = 1$, the frequency domain position of the lowest PRB of the third frequency domain resource satisfies: $PRB index = {N}_{BWP}^{size} - {RB}_{BWP}^{offset} ⋅ {N}_{RB} - \left(1+\left⌊\left({r}_{PUCCH}-8\right)/{N}_{CS}\right⌋\right) ⋅ {N}_{RB} - {RB}_{offset 3}$

The frequency domain position of the lowest PRB of the fourth frequency domain resource satisfies: $PRB index = {RB}_{BWP}^{offset} ⋅ {N}_{RB} + \left⌊\left({r}_{PUCCH}-8\right)/{N}_{CS}\right⌋ ⋅ {N}_{RB} + {RB}_{offset}$

*r*_{PUCCH} represents the resource index of the PUCCH, ${RB}_{BWP}^{offset}$ represents the frequency offset of the RB in the first uplink BWP, ${N}_{BWP}^{size}$ represents the quantity of RBs included in the first uplink BWP, *N_{CS}* is the quantity of initial cyclic shift indexes in the initial cyclic shift index set, *RB_{offset}* represents the first frequency offset, *RB*_{*offset*3} represents the second frequency offset, └┘ represents rounding down, and *N_{RB}* represents the quantity of RBs.

It may be understood that, when $\left⌊{r}_{PUCCH}/8\right⌋ = 1$, Formula (13) and Formula (14) are used to determine frequency domain positions of last eight PUCCH resources of the 16 PUCCH resources included in the common PUCCH resource set.

Optionally, the transmission on the PUCCH for Msg4/MsgB PDSCH is also applicable to a plurality of time units (for example, including an SBFD time unit and a non-SBFD time unit). In this case, the fifth frequency domain resource and the sixth frequency domain resource in the non-SBFD time unit may be determined according to Formula (3) to Formula (6), and the third frequency domain resource and the fourth frequency domain resource in the SBFD time unit may be determined according to Formula (11) to Formula (13).

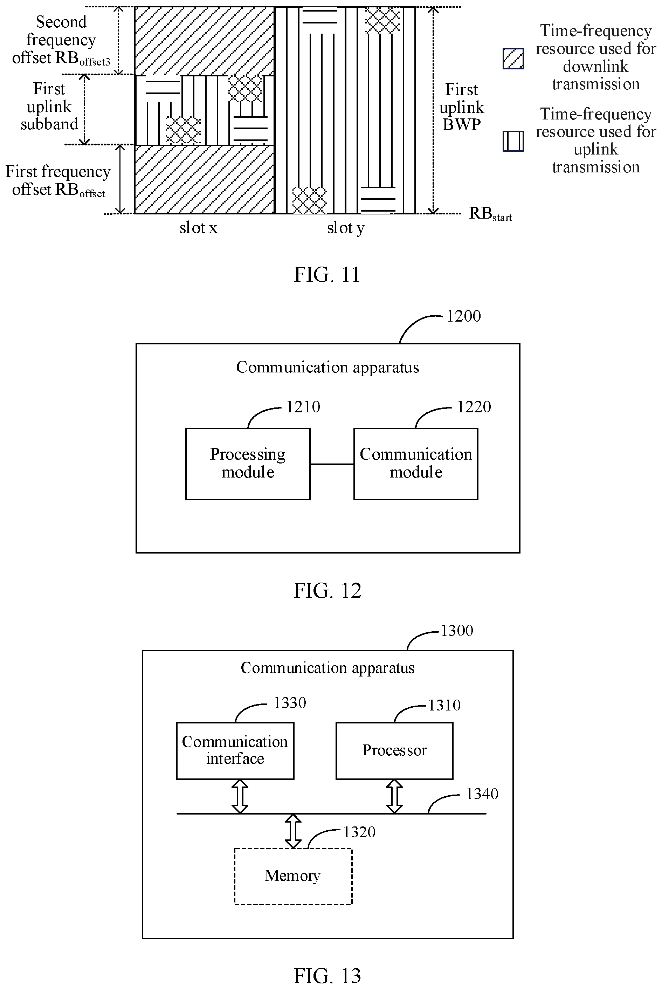

FIG. 11 is a diagram of transmission on a PUCCH for Msg4/MsgB PDSCH according to this application. As shown in FIG. 11, a horizontal axis may be considered as a time domain resource, and a vertical axis may be considered as a frequency domain resource. An example in which a time unit is a slot, a frequency domain unit is an RB, and the transmission on the PUCCH for Msg4/MsgB PDSCH is intra-slot frequency hopping transmission is used. The time domain resource includes a slot x and a slot y, where the slot x is an SBFD slot, and the slot y is an uplink non-SBFD slot. For example, a grid may represent any one of first eight PUCCH resources in a common PUCCH resource set, and a horizontally hatched square represents any one of last eight PUCCH resources in the common PUCCH resource set. A PUCCH resource (for example, the fifth frequency domain resource or the sixth frequency domain resource) in the slot y may be determined based on Formula (3) to Formula (6), and a PUCCH resource (for example, the third frequency domain resource or the fourth frequency domain resource) in the slot x may be determined based on Formula (11) to Formula (14). Because a protocol supports intra-slot PUCCH frequency hopping transmission, both the third frequency domain resource and the fourth frequency domain resource may be located in the slot x and the slot y. It can be learned from the foregoing formulas and FIG. 11 that the PUCCH resource (for example, the third frequency domain resource or the fourth frequency domain resource) in the slot x may be obtained by applying a first frequency offset RB_{offset1} or a third frequency offset RB_{offset3} to the PUCCH resource (for example, the fifth frequency domain resource or the sixth frequency domain resource) in the slot y. A frequency offset between a start RB of the fifth frequency domain resource and a start RB of the sixth frequency domain resource is RB_{offset1}, and a frequency offset between an end RB of the first uplink BWP and an end RB of the first frequency domain resource is RB_{offset3}. For example, it is assumed that a horizontally hatched square represents the fifth frequency domain resource or the third frequency domain resource, and a grid represents the sixth frequency domain resource or the fourth frequency domain resource. After determining the third frequency domain resource and the fourth frequency domain resource, the terminal device may send, sequentially on the third frequency domain resource and the fourth frequency domain resource in the slot x, the PUCCH for Msg4/MsgB PDSCH to the network device through frequency hopping. Optionally, the terminal device may alternatively send, sequentially on the fifth frequency domain resource and the sixth frequency domain resource in the slot y, the PUCCH for Msg4/MsgB PDSCH to the network device in the slot y through frequency hopping.

It should be noted that the frequency domain position of the second frequency domain resource shown in FIG. 9 to FIG. 11 is merely an example provided for ease of understanding, and should not constitute any limitation on the technical solutions of this application. For example, quantities of third frequency domain resources, fourth frequency domain resources, fifth frequency domain resources, and sixth frequency domain resources included in the second frequency domain resource are not limited in this application.

S820: The terminal device sends, on the third frequency domain resource and the fourth frequency domain resource in a first SBFD time unit, the first signal to the network device through frequency hopping, and correspondingly, the network device receives, on the third frequency domain resource and the fourth frequency domain resource in the first SBFD time unit, the first signal from the terminal device.

For example, the first signal is carried on a PUSCH or a PUCCH.

It should be noted that frequency hopping means that a frequency domain position of a frequency domain resource to which the first signal is to be mapped varies. Generally, when frequency hopping is enabled, a frequency domain position to which data to be sent is mapped varies at different moments. Frequency positions of data to be sent in different slots may be different. In uplink channel transmission performed through frequency hopping, a frequency diversity gain of a communication system can be obtained, thereby improving uplink transmission performance.

In this application, the first SBFD time unit includes at least one of the following: one or more slots; or one or more symbols.

Optionally, the first SBFD time unit may include one or more frames, or another time unit. This is not limited in this application.

Optionally, a quantity of slots, symbols, or frames included in the first SBFD time unit is not limited in this application. For example, a slot is used as an example. The terminal device may send, on the third frequency domain resource and the fourth frequency domain resource in one or more symbols in one slot, the first signal through frequency hopping, namely, intra-slot frequency hopping; or the terminal device may send, on the third frequency domain resource and the fourth frequency domain resource in a plurality of slots, the first signal through frequency hopping, namely, inter-slot frequency hopping. According to the foregoing solution, two manners, inter-slot frequency hopping and intra-slot frequency hopping, are provided to perform uplink channel transmission, so that frequency hopping flexibility is improved, the uplink channel transmission falls within the uplink frequency domain resource in the SBFD time unit, and normal uplink channel transmission is ensured.

In a first example, the first SBFD time unit includes a first slot and a second slot. That the terminal device sends, on the third frequency domain resource and the fourth frequency domain resource in the first SBFD time unit, the first signal through frequency hopping includes: The terminal device sends, on the third frequency domain resource in the first slot, the first signal, and sends, on the fourth frequency domain resource in the second slot, the first signal.

Optionally, whether the first slot and the second slot are consecutive slots is not limited in this application. For example, the third frequency domain resource is located in a slot 1, and the fourth frequency domain resource is located in a slot 2. In this case, it indicates that inter-slot frequency hopping is frequency hopping transmission performed in consecutive slots. Alternatively, the third frequency domain resource is located in a slot 0, and the fourth frequency domain resource is located in a slot 2. In this case, it indicates that inter-slot frequency hopping is frequency hopping transmission performed in inconsecutive slots.

In a second example, the first SBFD time unit includes a first symbol and a second symbol. That the terminal device sends, on the third frequency domain resource and the fourth frequency domain resource in the first SBFD time unit, the first signal through frequency hopping includes: The terminal device sends, on the third frequency domain resource in the first symbol, the first signal, and sends, on the fourth frequency domain resource in the second symbol, the first signal.

Optionally, whether the first symbol and the second symbol are consecutive symbols is not limited in this application. For example, the third frequency domain resource is located in a symbol 1 in a slot 1, and the fourth frequency domain resource is located in a symbol 2 in the slot 1. In this case, it indicates that inter-slot frequency hopping may be frequency hopping transmission performed in consecutive symbols in a same slot. For another example, the third frequency domain resource is located in a symbol 1 in a slot 2, and the fourth frequency domain resource is located in a symbol 3 in the slot 2. In this case, it indicates that inter-slot frequency hopping is frequency hopping transmission performed in inconsecutive symbols in a same slot.

Optionally, the second frequency domain resource may further include a fifth frequency domain resource and a sixth frequency domain resource, and the fifth frequency domain resource and the sixth frequency domain resource are used to send the first signal. In this case, the method further includes the following step S802.

S802: The terminal device sends, on the fifth frequency domain resource and the sixth frequency domain resource in a first non-SBFD time unit, the first signal to the network device through frequency hopping, and correspondingly, the network device receives, on the fifth frequency domain resource and the sixth frequency domain resource in the first non-SBFD time unit, the first signal from the terminal device.

Optionally, a quantity of fifth frequency domain resources and a quantity of sixth frequency domain resources are not limited in this application. In other words, in embodiments of this application, the terminal device is supported in performing uplink channel transmission in an SBFD time unit and a non-SBFD time unit, so that frequency hopping flexibility is improved, and a success rate of random access of the terminal device is improved.

In this application, the first non-SBFD time unit includes at least one of the following: one or more slots; or one or more symbols.

Optionally, the first non-SBFD time unit may include one or more frames, or another time unit. This is not limited in this application.

Optionally, a quantity of slots, symbols, or frames included in the first non-SBFD time unit is not limited in this application. For example, a slot is used as an example. The terminal device may send, on the fifth frequency domain resource and the sixth frequency domain resource in one or more symbols in one slot, the first signal through frequency hopping, namely, intra-slot frequency hopping; or the terminal device may send, on the fifth frequency domain resource and the sixth frequency domain resource in a plurality of slots, the first signal through frequency hopping, namely, inter-slot frequency hopping. According to the foregoing solution, two manners, inter-slot frequency hopping and intra-slot frequency hopping, are provided to perform uplink channel transmission, so that frequency hopping flexibility is improved, and normal uplink channel transmission in a non-SBFD time unit and an SBFD time unit is ensured.

In a first example, the first non-SBFD time unit includes a third slot and a fourth slot. Sending, on the fifth frequency domain resource and the sixth frequency domain resource in the first non-SBFD time unit, the first signal through frequency hopping includes: The terminal device sends, on the fifth frequency domain resource in the first slot, the first signal, and sends, on the sixth frequency domain resource in the second slot, the first signal.

Optionally, whether the third slot and the fourth slot are consecutive slots is not limited in this application. For example, the fifth frequency domain resource is located in a slot 0, and the sixth frequency domain resource is located in a slot 1. In this case, it indicates that inter-slot frequency hopping is frequency hopping transmission performed in consecutive slots. Alternatively, the fifth frequency domain resource is located in a slot 0, and the sixth frequency domain resource is located in a slot 2. In this case, it indicates that inter-slot frequency hopping is frequency hopping transmission performed in inconsecutive slots.

In a second example, the first non-SBFD time unit includes a third symbol and a fourth symbol. That the terminal device sends, on the fifth frequency domain resource and the sixth frequency domain resource in the first non-SBFD time unit, the first signal through frequency hopping includes: The terminal device sends, on the fifth frequency domain resource in the third symbol, the first signal, and sends, on the sixth frequency domain resource in the fourth symbol, the first signal.

Optionally, whether the first symbol and the second symbol are consecutive symbols is not limited in this application. For example, the fifth frequency domain resource is located in a symbol 1 in a slot 2, and the sixth frequency domain resource is located in a symbol 2 in the slot 2. In this case, it indicates that inter-slot frequency hopping may be frequency hopping transmission performed in consecutive symbols in a same slot. For another example, the fifth frequency domain resource is located in a symbol 1 in a slot 1, and the sixth frequency domain resource is located in a symbol 3 in the slot 1. In this case, it indicates that inter-slot frequency hopping is frequency hopping transmission performed in inconsecutive symbols in a same slot.

According to the solution provided in this application, the second frequency domain resource is determined based on the frequency domain resource in the overlap between the first uplink BWP and the first uplink subband, and transmission of an uplink signal is performed, through frequency hopping, on the third frequency domain resource and the fourth frequency domain resource that are included in the second frequency domain resource, so that frequency hopping flexibility can be improved, uplink channel transmission falls within an uplink frequency domain resource in an SBFD time unit, normal uplink channel transmission is ensured, and a success rate of random access performed by the terminal device in the SBFD time unit is improved.

The foregoing describes in detail embodiments on a communication method side in this application with reference to FIG. 1 to FIG. 11. The following describes in detail embodiments on a communication apparatus side in this application with reference to FIG. 12 and FIG. 13. It should be understood that descriptions of the apparatus embodiments correspond to the descriptions of the method embodiments, and therefore for a part that is not described in detail, refer to the foregoing method embodiments.

FIG. 12 is a diagram of a communication apparatus according to an embodiment of this application. As shown in FIG. 12, the communication apparatus 1200 includes a processing module 1210 and a communication module 1220. The communication apparatus 1200 may be a terminal device, or may be a communication apparatus, for example, a chip, a chip system, or a circuit, that may be used in or in conjunction with the terminal device and that can implement a method performed by the terminal device. Alternatively, the communication apparatus 1200 may be a network device, or may be a communication apparatus, for example, a chip, a chip system, or a circuit, that may be used in or in conjunction with the network device and that can implement a method performed by the network device.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1200 is used in the terminal device, the processing module 1210 may be configured to implement a processing function of the terminal device in the foregoing embodiments, and the communication module 1220 may be configured to implement a transceiver function of the terminal device in the foregoing embodiments.

When the communication apparatus 1200 is used in the network device, the processing module 1210 may be configured to implement a processing function of the network device in the foregoing embodiments, and the communication module 1220 may be configured to implement a transceiver function of the network device in the foregoing embodiments.

In addition, it should be noted that the communication module and/or the processing module may be implemented using a virtual module. For example, the processing module may be implemented using a software functional unit or a virtual apparatus, and the communication module may be implemented using a software functional or virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into the modules is an example, is merely logical function division, and may be other division in actual implementation. In addition, functional modules in the examples of this application may be integrated into one processor, each of the modules may exist alone physically, or two or more modules may be integrated into one module. The integrated module may be implemented in a form of hardware, or may be implemented in a form of a software functional module.

FIG. 13 is a diagram of another communication apparatus according to an embodiment of this application. As shown in FIG. 13, optionally, the communication apparatus 1300 may be a chip or a chip system. Optionally, the chip system in this application may include a chip, or may include a chip and another discrete device.

The communication apparatus 1300 may be configured to implement a function of any device (for example, the terminal device or the network device) in the communication system described in the foregoing examples. The communication apparatus 1300 may include at least one processor 1310. Optionally, the processor 1310 is coupled to a memory. The memory may be located in the apparatus. Alternatively, the memory may be integrated with the processor. Alternatively, the memory may be located outside the apparatus. For example, the communication apparatus 1300 may further include at least one memory 1320. The memory 1320 stores a computer program, a computer program or instructions, and/or data necessary for implementing any one of the foregoing examples. The processor 1310 may execute the computer program stored in the memory 1320, to complete the method in any one of the foregoing examples.

The communication apparatus 1300 may further include a communication interface 1330, and the communication apparatus 1300 may exchange information with another device through the communication interface 1330. For example, the communication interface 1330 may be a transceiver, a circuit, a bus, a module, a pin, or a communication interface of another type. When the communication apparatus 1300 is a chip-type apparatus or circuit, the communication interface 1330 in the apparatus 1300 may alternatively be an input/output circuit, and may input information (or referred to as receiving information) and output information (or referred to as sending information). The processor 1310 is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1310 may operate in collaboration with the memory 1320 and the communication interface 1330. A specific medium connecting the processor 1310, the memory 1320, and the communication interface 1330 is not limited in this application.

Optionally, as shown in FIG. 13, the processor 1310, the memory 1320, and the communication interface 1330 are connected to each other through a bus 1340. Optionally, the bus may include a type of bus like an address bus, a data bus, or a control bus. In addition, for ease of representation, FIG. 13 shows one bus 1340, but this does not mean that there is only one bus or only one type of bus.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

An embodiment of this application further provides a computer-readable storage medium. The computer-readable storage medium stores computer instructions used to implement the methods performed by the terminal device and the network device in the foregoing method embodiments.

An embodiment of this application further provides a computer program product, including instructions. When the instructions are executed by a computer, the methods performed by the terminal device and the network device in the foregoing method embodiments are implemented.

An embodiment of this application further provides a communication system. The communication system includes the terminal device and the network device in the foregoing embodiments.

For explanations and beneficial effects of related content in any one of the apparatuses provided above, refer to the corresponding method embodiment provided above. Details are not described herein again.

For ease of understanding the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, the character "/" usually indicates an "or" relationship between associated objects. "At least one item (piece) of the following" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "indication" or "indicating" may include directly indicating and indirectly indicating. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. An example sending method is not limited in embodiments of this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include advance definition, for example, definition in a protocol. "Preconfiguration" may be implemented by pre-storing corresponding code or a corresponding table in a device, or may be implemented in another manner that may indicate related information. For example, a specific implementation thereof is not limited in this application.
(7) In this application, "communication" may also be described as "data transmission", "information transmission", "data processing", or the like. "Transmission" includes "sending" and "receiving".
(8) In this application, "sending information to XX (a device)" may be understood as that a destination of the information is the device, and may include directly or indirectly sending the information to the device. "Receiving information from XX (a device) or receiving information that is from XX (a device)" may be understood as that a source of the information is the device, and may include directly or indirectly receiving the information from the device. The information may undergo necessary processing, for example, a format change, between the source end and the destination end of information sending. However, the destination end may understand valid information from the source end.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

It should be understood that, in some of the foregoing embodiments, a device in an existing network architecture is mainly used as an example for description, and a specific form of the device is not limited in embodiments of this application. For example, all devices that can implement a same function in the future are applicable to embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in the form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, based on a first frequency domain resource, a second frequency domain resource, wherein the first frequency domain resource is a frequency domain resource in an overlap between a first uplink bandwidth part BWP and a first uplink subband, the second frequency domain resource comprises a third frequency domain resource and a fourth frequency domain resource, and the third frequency domain resource and the fourth frequency domain resource are used to send a first signal; and
sending, on the third frequency domain resource and the fourth frequency domain resource in a first subband full-duplex SBFD time unit, the first signal through frequency hopping, wherein the first signal is carried on a physical uplink shared channel PUSCH or a physical uplink control channel PUCCH.

2. The method according to claim 1, wherein the second frequency domain resource further comprises a fifth frequency domain resource and a sixth frequency domain resource, the fifth frequency domain resource and the sixth frequency domain resource are used to send the first signal, and the method further comprises:
sending, on the fifth frequency domain resource and the sixth frequency domain resource in a first non-SBFD time unit, the first signal through frequency hopping.

3. The method according to claim 1 or 2, wherein the first SBFD time unit comprises at least one of the following:
one or more slots; or
one or more symbols.

4. The method according to claim 3, wherein
the first SBFD time unit comprises a first slot and a second slot; and
sending, on the third frequency domain resource and the fourth frequency domain resource in the first SBFD time unit, the first signal through frequency hopping comprises:
sending, on the third frequency domain resource in the first slot, the first signal, and sending, on the fourth frequency domain resource in the second slot, the first signal.

5. The method according to claim 3, wherein
the first SBFD time unit comprises a first symbol and a second symbol; and
sending, on the third frequency domain resource and the fourth frequency domain resource in the first SBFD time unit, the first signal through frequency hopping comprises:
sending, on the third frequency domain resource in the first symbol, the first signal, and sending, on the fourth frequency domain resource in the second symbol, the first signal.

6. The method according to any one of claims 1 to 5, wherein the method further comprises:
when ${N}_{BWP}^{size} ′ < = 180$*,* truncating a frequency domain resource allocation FDRA field to m least significant bits, wherein
$m = \left⌈{log}_{2}\left({N}_{BWP}^{size}′⋅\left({N}_{BWP}^{size}′+1\right)/2\right)\right⌉$, and determining, based on the m least significant bits, the third frequency domain resource and the fourth frequency domain resource, wherein m is a positive integer; $when {N}_{BWP}^{size} ′ > 180 ,$
inserting *n* most significant bits into the FDRA field, wherein $n = \left⌈{log}_{2}\left({N}_{BWP}^{size}′⋅\left({N}_{BWP}^{size}′+1\right)/2\right)\right⌉ - 12$ , and determining, based on an FDRA field into which the n most significant bits are inserted, the third frequency domain resource and the fourth frequency domain resource, wherein n is a positive integer;
or inserting p most significant bits into the FDRA field, wherein $p = \left⌈{log}_{2}\left({N}_{BWP}^{size}′⋅\left({N}_{BWP}^{size}′+1\right)/2\right)\right⌉ - 14$ , and determining, based on an FDRA field into which the p most significant bits are inserted, the third frequency domain resource and the fourth frequency domain resource, wherein p is a positive integer,
wherein ${N}_{BWP}^{size} ′$ represents a quantity of resource blocks RBs comprised in the first frequency domain resource, ┌ ┐ represents rounding up, and log represents taking a logarithm.

7. The method according to claim 6, wherein
when $\left({L}_{RBs}-1\right) \leq \left⌊{N}_{BWP}^{size}′/2\right⌋$*,* a resource indication value RIV in a current FDRA field satisfies: $RIV = {N}_{BWP}^{size} ′ \left({L}_{RBs}-1\right) + \left({RB}_{start}-{RB}_{offset}\right) ;$ or
when $\left({L}_{RBs}-1\right) > \left⌊{N}_{BWP}^{size}′/2\right⌋$*,* the RIV in the current FDRA field satisfies: $RIV = {N}_{BWP}^{size} ′ \left({N}_{BWP}^{size}′-{L}_{RBs}+1\right) + \left({N}_{BWP}^{size}′-1-\left({RB}_{start}-{RB}_{offset}\right)\right) ,$
wherein *L_{RBs}* represents a quantity of RBs comprised in the third frequency domain resource or the fourth frequency domain resource, *RBₛₜₐᵣₜ* represents a start RB of the third frequency domain resource or a start RB of the fourth frequency domain resource, *RB_{offset}* represents a frequency offset between a start RB of the first frequency domain resource and a start RB of the first uplink BWP, ${N}_{BWP}^{size} ′$ represents the quantity of RBs comprised in the first frequency domain resource, and └ ┘ represents rounding down.

8. The method according to claim 2, wherein the determining, based on the first frequency domain resource, the second frequency domain resource comprises:
determining, based on the fifth frequency domain resource, the sixth frequency domain resource, and a first frequency offset, frequency domain positions of the third frequency domain resource and the fourth frequency domain resource, wherein
the first frequency offset represents a frequency offset between a start RB of the first frequency domain resource and a start RB of the first uplink BWP.

9. The method according to claim 8, wherein $\begin{matrix}{RB}_{start} \left({n}_{s}^{μ}\right) = \\ \left\{\begin{matrix}{RB}_{start} \\ {RB}_{start} mod {N}_{BWP}^{size} ′ + {RB}_{offset} \\ \left({RB}_{start}+{RB}_{offset 1}\right) {modN}_{BWP}^{size} \\ \left({RB}_{start} mod {N}_{BWP}^{size}′+{RB}_{offset}+{RB}_{offset 2}\right) {modN}_{BWP}^{size} ′ + {RB}_{offset}\end{matrix} \begin{matrix}{n}_{s}^{μ} mod 2 = 0 , {n}_{s}^{μ} in the first non - SBFD time unit \\ {n}_{s}^{μ} mod 2 = 0 , {n}_{s}^{μ} is the first SBFD time unit \\ {n}_{s}^{μ} mod 2 = 1 , {n}_{s}^{μ} is the first non - SBFD time unit \\ {n}_{s}^{μ} mod 2 = 1 , {n}_{s}^{μ} is the first SBFD time unit\end{matrix}\right. ,\end{matrix}$ wherein
${n}_{s}^{μ}$ represents the first SBFD time unit or the first non-SBFD time unit, *RBₛₜₐᵣₜ* represents a start RB of the fifth frequency domain resource or a start RB of the sixth frequency domain resource, *RB_{offset}* represents the first frequency offset, ${N}_{BWP}^{size} ′$ represents a quantity of RBs comprised in the first frequency domain resource, ${N}_{BWP}^{size}$ represents a quantity of RBs comprised in the first uplink BWP, *RB*_{*offset*1} represents a frequency offset between the start RB of the fifth frequency domain resource and the start RB of the sixth frequency domain resource, *RB_{offset2}* represents a frequency offset between a start RB of the third frequency domain resource and a start RB of the fourth frequency domain resource, and mod represents a modulo operation.

10. The method according to claim 2, wherein the determining, based on the first frequency domain resource, the second frequency domain resource comprises:
determining, based on the fifth frequency domain resource, the sixth frequency domain resource, and a first coefficient, frequency domain positions of the third frequency domain resource and the fourth frequency domain resource, wherein the first coefficient *α* satisfies: $α = {N}_{BWP}^{size} ′ / {N}_{BWP}^{size} ,$ wherein
${N}_{BWP}^{size} ′$ represents a quantity of RBs comprised in the first frequency domain resource, and ${N}_{BWP}^{size}$ represents a quantity of RBs comprised in the first uplink BWP.

11. The method according to claim 10, wherein $\begin{matrix}{RB}_{start} \left({n}_{s}^{μ}\right) = \\ \left\{\begin{matrix}{RB}_{start} \\ \left⌊{RB}_{start}∗α\right⌋ + {RB}_{offset} \\ \left({RB}_{start}+{RB}_{offset 1}\right) {modN}_{BWP}^{size} \\ \left⌊\left({RB}_{start}+{RB}_{offset 1}\right){modN}_{BWP}^{size}∗α\right⌋ + {RB}_{offset}\end{matrix} \begin{matrix}{n}_{s}^{μ} mod 2 = 0 , {n}_{s}^{μ} is the first non - SBFD time unit \\ {n}_{s}^{μ} mod 2 = 0 , {n}_{s}^{μ} is the first SBFD time unit \\ {n}_{s}^{μ} mod 2 = 1 , {n}_{s}^{μ} is the first non - SBFD time unit \\ {n}_{s}^{μ} mod 2 = 1 , {n}_{s}^{μ} is the first SBFD time unit\end{matrix}\right. ,\end{matrix}$ wherein
${n}_{s}^{μ}$ represents the first SBFD time unit or the first non-SBFD time unit, *RBₛₜₐᵣₜ* represents a start RB of the fifth frequency domain resource or a start RB of the sixth frequency domain resource, *RB_{offset}* represents a frequency offset between a start RB of the first frequency domain resource and a start RB of the first uplink BWP, *RB*_{*offset*1} represents a frequency offset between the start RB of the fifth frequency domain resource and the start RB of the sixth frequency domain resource, mod represents a modulo operation, and └ ┘ represents rounding down.

12. The method according to claim 1, wherein the determining, based on the first frequency domain resource, the second frequency domain resource comprises:
determining, based on a first frequency offset and a second frequency offset, a frequency domain position of the third frequency domain resource and a frequency domain position of the fourth frequency domain resource, wherein the first frequency offset is a frequency offset between a start RB of the first frequency domain resource and a start RB of the first uplink BWP, and the second frequency offset is a frequency offset between an end RB of the first uplink BWP and an end RB of the first frequency domain resource.

13. The method according to claim 12, wherein
when $\left⌊{r}_{PUCCH}/8\right⌋ = 0$,
a frequency domain position of a lowest physical resource block PRB of the third frequency domain resource satisfies: $PRB = {RB}_{BWP}^{offset} ⋅ {N}_{RB} + \left⌊{r}_{PUCCH}/{N}_{CS}\right⌋ ⋅ {N}_{RB} + {RB}_{offset} ;$ and
a frequency domain position of a lowest PRB of the fourth frequency domain resource satisfies: $PRB = {N}_{BWP}^{size} - {RB}_{BWP}^{offset} ⋅ {N}_{RB} - \left(1+\left⌊{r}_{PUCCH}/{N}_{CS}\right⌋\right) ⋅ {N}_{RB} - {RB}_{offset 3} ;$ or
when $\left⌊{r}_{PUCCH}/8\right⌋ = 1$,
the frequency domain position of the lowest PRB of the third frequency domain resource satisfies: $PRB = {N}_{BWP}^{size} - {RB}_{BWP}^{offset} ⋅ {N}_{RB} - \left(1+\left⌊{r}_{PUCCH}-8\right⌋{N}_{CS}\right) ⋅ {N}_{RB} - {RB}_{offset 3} ;$ and
the frequency domain position of the lowest PRB of the fourth frequency domain resource satisfies: $PRB = {RB}_{BWP}^{offset} ⋅ {N}_{RB} + \left⌊\left({r}_{PUCCH}-8\right)/{N}_{CS}\right⌋ ⋅ {N}_{RB} + {RB}_{offset} ,$
wherein *r*_{PUCCH} represents a resource index of the PUCCH, ${RB}_{BWP}^{offset}$ represents a frequency offset of an RB in the first uplink BWP, ${N}_{BWP}^{size}$ represents a quantity of RBs comprised in the first uplink BWP, *N_{CS}* represents a quantity of initial cyclic shift indexes in an initial cyclic shift index set, *RB_{offset}* represents the first frequency offset, *RB*_{*offset*3} represents the second frequency offset, *N_{RB}* represents a quantity of RBs, and └ ┘ represents rounding down.

14. The method according to any one of claims 1 to 13, wherein the method further comprises:
receiving indication information, wherein the indication information indicates the first uplink BWP and the first uplink subband.

15. A communication method, comprising:
sending indication information, wherein the indication information indicates a first uplink bandwidth part BWP and a first uplink subband, the first uplink BWP and the first uplink subband are used to determine a first frequency domain resource, and the first frequency domain resource is a frequency domain resource in an overlap between the first uplink BWP and the first uplink subband; and
receiving, in a first subband full-duplex SBFD time unit, on a third frequency domain resource and a fourth frequency domain resource, a first signal, wherein the first signal is carried on a physical uplink shared channel PUSCH or a physical uplink control channel PUCCH, the third frequency domain resource and the fourth frequency domain resource are comprised in a second frequency domain resource, and the second frequency domain resource is determined based on the first frequency domain resource.

16. The method according to claim 15, wherein
the first SBFD time unit comprises a first slot and a second slot; and
the receiving, on the third frequency domain resource and the fourth frequency domain resource in the first SBFD time unit, the first signal comprises:
receiving, on the third frequency domain resource in the first slot, the first signal, and receiving, on the fourth frequency domain resource in the second slot, the first signal.

17. The method according to claim 15, wherein
the first SBFD time unit comprises a first symbol and a second symbol; and
the receiving, on the third frequency domain resource and the fourth frequency domain resource in the first SBFD time unit, the first signal comprises:
receiving, on the third frequency domain resource in the first symbol, the first signal, and receiving, on the fourth frequency domain resource in the second symbol, the first signal.

18. The method according to any one of claims 15 to 17, wherein the second frequency domain resource further comprises a fifth frequency domain resource and a sixth frequency domain resource, the fifth frequency domain resource and the sixth frequency domain resource are used to receive the first signal, and the method further comprises:
receiving, on the fifth frequency domain resource and the sixth frequency domain resource in a first non-SBFD time unit, the first signal.

19. The method according to claim 18, wherein
the first non-SBFD time unit comprises a third slot and a fourth slot; and
the receiving, on the fifth frequency domain resource and the sixth frequency domain resource in the first non-SBFD time unit, the first signal comprises:
receiving, on the fifth frequency domain resource in the third slot, the first signal, and receiving, on the sixth frequency domain resource in the fourth slot, the first signal.

20. The method according to claim 18, wherein
the first non-SBFD time unit comprises a third symbol and a fourth symbol; and
the receiving, on the fifth frequency domain resource and the sixth frequency domain resource in the first non-SBFD time unit, the first signal comprises:
receiving, on the fifth frequency domain resource in the third symbol, the first signal, and receiving, on the sixth frequency domain resource in the fourth symbol, the first signal.

21. A communication apparatus, configured to implement the method according to any one of claims 1 to 14.

22. The apparatus according to claim 21, wherein the communication apparatus comprises any one of the following: a terminal device or a chip.

23. A communication apparatus, configured to implement the method according to any one of claims 15 to 20.

24. The apparatus according to claim 23, wherein the communication apparatus comprises any one of the following: a network device, a chip, a central unit CU, or a distributed unit DU.

25. A computer-readable storage medium, wherein the computer-readable storage medium stores a computer program or instructions, and when the computer program or the instructions are run, the method according to any one of claims 1 to 14 or the method according to any one of claims 15 to 20 is implemented.

26. A computer program product, wherein when the computer program product is run, the method according to any one of claims 1 to 14 is implemented, or the method according to any one of claims 15 to 20 is implemented.
